(19) **Europäisches Patentamt**

**European Patent Office**

**Office européen des brevets**

(11) Veröffentlichungsnummer : **0 476 088 B1**

(12) # EUROPÄISCHE PATENTSCHRIFT

(45) Veröffentlichungstag der Patentschrift :
**24.05.95 Patentblatt 95/21**

(21) Anmeldenummer : **91906279.4**

(22) Anmeldetag : **05.03.91**

(86) Internationale Anmeldenummer :
**PCT/EP91/00413**

(87) Internationale Veröffentlichungsnummer :
**WO 91/14157 19.09.91 Gazette 91/22**

(51) Int. Cl.[6] : **G01J 3/12**, G01J 3/42,
G02F 1/11, G01N 21/05,
G01J 3/02

(54) **EIN AKUSTO-OPTISCHES ABSTIMMBARES ZWEISTRAHL-SPEKTROMETER.**

(30) Priorität : **05.03.90 US 488687**

(43) Veröffentlichungstag der Anmeldung :
**25.03.92 Patentblatt 92/13**

(45) Bekanntmachung des Hinweises auf die
Patenterteilung :
**24.05.95 Patentblatt 95/21**

(84) Benannte Vertragsstaaten :
**BE CH DE DK ES FR GB IT LI NL SE**

(56) Entgegenhaltungen :
EP-A- 0 015 170
EP-A- 0 122 441
EP-A- 0 215 648
The Transactions of the IECE of Japan, vol. E
63, no. 5, May 1980, Ch. Masuda et al:
"Monochromatic light source with electronically variable wavelength", pages 329-336
Patent Abstracts of Japan, vol. 3, no. 90
(E-127), 31 July 1979 & JP-A-54068653
IEEE Transactions on Instrumentation and
Measurement, vol. IM-29, no. 4, December
1980, A. Takahashi et al: "A new automatic
measuring method for optical fibers using an
acoustooptic tunable filter", pages 348-351
The Journal of the Acoustical Soc. of Am., vol.
34, no. 6, June 1962, W. Liben: "Some applications of an ultrasonic light modulator", pages
860-861
The Marconi Review, vol. 46, no. 220, 1981,
(Rugby, GB) R.W. Carter et al: "The design
and performance of a bulk wave Bragg cell
spectrum analyzer", pages 57-76
Patent Abstracts of Japan, vol. 4, no. 100,
(P-19)(582), 18 July 1980 & JP-A-55057819

(56) Entgegenhaltungen :
**Solid State Devices Proceedings of the 6 Conference, vol. 44, Supplement, 1975 (1974), A.
Watanabe et al: "Te02 Acousto-optic tunable
filter", pages 127-131
Melles Griot Company, "Optics Guide 4", US,
Irvine, Melles Griot, 1988, pages 5/2-5/14,
7/2-7/9**

(73) Patentinhaber : **BRAN + LUEBBE GmbH
Werkstrasse 4
D-22844 Norderstedt (DE)**

(72) Erfinder : **KEMENY, Gabor, J.
B8 Kissam Road
Peekskill, NY 10566 (US)**
Erfinder : **SORYN, Carl, G.
Woodland Road RR 3
Pound Ridge, NY 10576 (US)**
Erfinder : **MARK, Howard
21 Terrace Avenue
Suffern, NY 10901 (US)**
Erfinder : **RACHLIS, Robert, E.
115 Douglas Road
Chappagua, NY 10514 (US)**
Erfinder : **EVANS, James
65 Glenbrook Road,
Appartment 3E
Stamford, CT 06902 (US)**
Erfinder : **ASHRAF, Aamir
149-27 35 Avenue
Flushing, NY 11354 (US)**

(74) Vertreter : **Vonnemann, Gerhard, Dr.-Ing. et al
Strasse, Vonnemann & Partner
An der Alster 84
D-20099 Hamburg (DE)**

## Beschreibung

Die vorliegende Erfindung bezieht sich auf ein akusto-optisches, abstimmbares Zweistrahl-Spektrometer bestehend aus

einer Strahlungsquelle,

einer Vorrichtung zur Kollimation von aus der Quelle austretender Strahlung,

einem akusto-optisch abstimmbaren Filter,

einer Ansteuerung des akusto-optisch abstimmbaren Filters für spezielle Frequenzen, so daß gewünschte enge Bandbreiten der auf das akusto-optisch abstimmbare Filter einfallenden Strahlung selektiert werden.

Außerdem betrifft die Erfindung ein Verfahren zur spektroskopischen Analyse flüssiger Proben gemäß dem Oberbegriff des Anspruchs 15.

Ein derartiges Spektrometer ist als sogenanntes Einstrahlspektrometer aus EP-A-0 215 648 bekannt. Es wird eingesetzt, um die Konzentrationen von Bestandteilen in Proben festzustellen und basiert auf deren Absorption bei bestimmten Wellenlängen. Zum Beispiel kann die Stärke-, die Eiweiß-, die Lipid- und Faserkonzentration von Körnern, die Oktanzahl von Benzin oder der Ligningehalt von Zellstoff und Papier durch Infrarotanalyse bestimmt werden. Während die meisten Analysesysteme auf den Gebrauch im Labor ausgerichtet sind, ist die Überwachung am Ort und die On-Line-Überwachung von Betriebsabläufen ein wichtiges Anwendungsfeld dieser Technologie. Bei der On-Line-Überwachung bewegen sich die Proben normalerweise und können inhomogen sein.

Üblicherweise tritt Rauschen als ein Problem auf, das die Genauigkeit von Extinktions-Messungen beeinträchtigt. Übliche Rauschquellen sind Fluktuationen bei der Emission aus der Strahlungsquelle, Hitze, Qualitätsverlust der Systembestandteile, Energieschwankungen und sonstige zufällige Veränderungen, die auf inneren und äußeren Ursachen beruhen. Zur Korrektur von durch Rauschen beeinflußten Messungen wird neben der Messung einer Probe eine Vergleichsgröße gemessen und beide werden verglichen. Wenn die Messungen zeitlich dicht genug hintereinander vorgenommen werden, beeinträchtigt das Rauschen, das die Probenablesung beeinträchtigt hat, auch die Anzeige der Vergleichsgröße und kann gestrichen werden.

Von den zwei Hauptarten Spektrometern, der Zweistrahl- und der Einstrahlspektrometer, kann nur ein Zweistrahlspektrometer die Probe und die Vergleichsgröße gleichzeitig messen. Ein Vertreter dieser Gattung ist in EP-A-0 122 441 beschrieben. Dies Spektrometer verwendet einen Ebert-Monochromator und erfordert dadurch einen hohen mechanischen Aufwand.

Aufgrund ihrer besseren Fehlerberichtigung sind Zweistrahlsysteme genauer als Einstrahlsysteme. Sie erfordern aber komplexe optische Systeme und sind daher teurer.

Das schnellste Umschalten zwischen Wellenlängen zur Erzeugung eines Spektrums für die Analyse kann, wie in EP-A-0 215 648 beschrieben, durch einen akusto-optischen einstellbaren Filter erreicht werden, der ein Kristall ist, dessen Brechungsindex durch akustische Wellen verändert werden kann.

Die Anwendung einer bestimmten Frequenz einer akustischen Welle auf ein doppelbrechendes Kristall verändert die Ausbreitungsrichtung und die Polarisierung eines engen Wellenlängenbandes der einfallenden Strahlung und hat zwei abgestimmte Strahlenbündel zum Ergebnis, die voneinander und von der nichtabgestimmten Strahlung abweichen. Die abgestimmte Wellenlänge kann isoliert werden und zur Analyse der Probe eingesetzt werden. Das abgestimmte Wellenlängenband kann in Millisekunden, abhängig von der Geschwindigkeit anderer Bestandteile des Systems, geändert werden.

Das Phänomen, daß aus dem akusto-optisch abstimmbaren Filter neben einem polychromatischen auch zwei monochromatische Strahlen mit unterschiedlichen Richtungen austreten, wird in der Schrift "The Transactions of the IECE of Japan", Band E 63, Nr. 5, Mai 1980, Ch. Masuda et al.: "Monochromatic light source with electronically variable wavelength", Seiten 329-336, beschrieben und in einer Vorrichtung dazu benutzt, um einen dieser Strahlen in einem Regelkreis zur Konstanthaltung der Lichtintensität zurückzuführen.

Aufgabe der vorliegenden Erfindung ist es, ein akustooptisch abstimmbares Spektrometer bereitzustellen, das die Unzulänglichkeiten früherer Systeme überwindet.

Diese Aufgabe wird dadurch gelöst, daß im Gebrauch der akusto-optisch abstimmbare Filter einen ersten, ordentlichen und einen zweiten, außerordentlichen Strahl der gewünschten engen Bandbreite bildet, sowie einen dritten Strahl außerhalb der engen Bandbreite bildet, wobei alle drei Strahlen in der Richtung voneinander abweichen, wobei eine erste Vorrichtung vorgesehen ist, durch welche der zweite Strahl als Meßstrahl auf einem ersten Strahlenweg auf die Probe und nach Beeinflussung durch den Probenbereich einer ersten Empfangseinrichtung zugeführt wird und eine zweite Vorrichtung vorgesehen ist, durch welche der erste Strahl auf einem zweiten Strahlenweg als Referenzstrahl einer zweiten Empfangseinrichtung zugeführt wird, wobei die beiden Strahlenwege außerhalb des Probenbereichs analog aufgebaut sind und die von den Empfängern ermittelten Signale einer Vorrichtung zur Bildung eines Meßsignals zuführbar sind.

Weitere vorteilhafte Ausgestaltungen werden in den abhängigen Ansprüchen 2 bis 14 beschrieben.

EP 0 476 088 B1

Das Spektrometer der vorliegenden Erfindung isoliert die beiden abweichenden abgestimmten Strahlenbündel, die von einem doppelbrechenden Filter erzeugt werden, voneinander und von der nicht-abgestimmten Strahlung und verwendet einen Strahl, um eine Probe zu analysieren, und den anderen zum Vergleich. Die beiden Messungen werden dann verglichen, um die Messung der Probe im Hinblick auf ein Rauschen zu korrigieren. Aufgrund seiner Geschwindigkeit und seiner Präzision ist das System insbesondere für den Einsatz bei OnLine-Überwachung geeignet.

Ein akusto-optisches abstimmbares Zweistrahl-Spektrometer nach der vorliegenden Erfindung schließt einen doppelbrechenden akusto-optischen abstimmbaren Filter in sich ein. Es sind Mittel vorhanden, um den akusto-optischen Filter auf einer gewünschten Frequenz zu betreiben, was einen ersten und einen zweiten Strahl ergibt, die voneinander und von der nicht-abgestimmten Strahlung abweichen. Es sind Mittel vorhanden, um den ersten abgestimmten Strahl zur Verwendung bei der Analyse einer Probe aufzufangen, und Mittel, um den zweiten abgestimmten Strahl zur Verwendung als Vergleichsgröße aufzufangen.

Das akusto-optische abstimmbare Spektrometer der vorliegenden Erfindung umfaßt auch eine Strahlungsquelle und Mittel zur parallelen Ausrichtung der Strahlung aus der Strahlungsquelle. Die Strahlung fällt auf einen akusto-optischen Filter. Es gibt ein Mittel, den akusto-optischen Filter auf bestimmten Frequenzen zu betreiben, um die gewünschten engen Bandbreiten der einfallenden Strahlung einzustellen. Die eingestellten Bandbreiten bilden einen ersten und einen zweiten abgestimmten Strahl, die voneinander und von der Strahlung außerhalb der engen Brandbreite abweichen. Es ist ein Mittel vorhanden, um den ersten abgestimmten Strahl auf eine Probe zwecks Analyse zu übertragen. Es wird ein erster Detektor bereitgestellt, um den ersten abgestimmten Strahl nach der Belichtung der Probe zu empfangen, und ein zweiter Detektor wird bereitgestellt, um den zweiten abgestimmten Strahl zur Verwendung als Vergleichsgröße zu empfangen. Es ist ein Mittel vorhanden, um den zweiten abgestimmten Strahl auf den zweiten Detektor zu übertragen. Es ist ein Analysemittel vorhanden und ein Mittel, um die Informationen vom ersten und vom zweiten Detektor auf das Analysemittel zu übertragen.

Ein optisches System richtet die Strahlung aus einer (Strahlen-)quelle vorzugsweise parallel aus, bevor sie in den AOTF eintritt. Um die Strahlung von der Quelle aufzufangen, kann ein Kondensator eingesetzt werden, und sie (die Strahlung) kann dann auf eine Blende fallen, die die Winkelabweichung der Strahlung, die auf den Filter fällt, begrenzt. Einer Kollimatorlinse kann eine weitere Blende folgen, die die Strahlung, die auf den AOF fällt, begrenzt.

Hinter dem AOTF kann ein Achromatsystem verwandt werden, um die beiden abgestimmten Strahlen auf zwei symmetrische Blenden zu fokussieren. Die nichtabgestimmten Strahlen werden abgeschattet. Ein Sammelsystem hinter jeder Blende kann verwendet werden, um die abgestimmten Strahlen auf zwei Lichtleitfasern zu fokussieren, eine zur Übertragung des einen abgestimmten Strahls auf eine Probenzelle, um die Probe zu analysieren, die andere für die direkte Übertragung des anderen abgestimmten Strahls auf einen Detektor.

Die Probenzelle erhält einen abgestimmten Strahl aus einer Lichtleitfaser und wendet ihn auf eine Probe in einem Analysebereich. Der abgestimmte Strahl, der aus der Lichtleitfaser herauskommt, wird von einer ersten Glaskugel parallel ausgerichtet, bevor er die Probe belichtet. Eine zweite Glaskugel fokussiert die Strahlung, die durch die Probe übertragen und gestreut wird, auf eine weitere Lichtleitfaser, welche die Strahlung zu einem Detektor trägt.

Eine Steuer- und Regeleinrichtung, die einen Mikroprozessor enthält, analysiert den Proben- und den Vergleichsstrahl, um die Extinktion bei einer bestimmten Wellenlänge zu bestimmen. Der Mikroprozessor betreibt auch den akusto-optischen Filter auf einer bestimmten Frequenz, um spezifische abgestimmte Wellenlängen zu erzeugen. Die Regeleinrichtung kann einen Niedrigfrequenz-Synthesizer und einen Phasensynchronisierkreis benutzen, der einen spannungsgeregelten Hochfrequenzoszillator und einen Treiberkreis enthält, um die tatsächlichen Ansteuerungsfrequenzen zu erzeugen. Der Mikroprozessor sieht durch sein Abtastmuster und seine Frequenzerzeugung Fehlerkorrekturen vor, einschließlich der Korrektur von Temperaturabweichungen.

Die Erfindung wird anhand einer Zeichnung beschrieben. Die Figuren zeigen im einzelnen:

| | |
|---|---|
| Abbildung 1 | ist ein schematisches Diagramm der Hauptelemente des akusto-optischen abstimmbaren Spektrometers aus der vorliegenden Erfindung; |
| Abbildung 2 | ist ein schematisches Diagramm der Abstimmung der einfallenden Strahlung durch einen doppelbrechenden akusto-optischen Filter; |
| Abbildung 3 | ist eine schematische Ansicht des optischen Systems der vorliegenden Erfindung; |
| Abbildung 3a | ist eine Vorderansicht der ersten Blende des optischen Systems, das in Abbildung 3 gezeigt wird; |
| Abbildung 3b | ist eine Vorderansicht der zweiten Blende des optischen Systems, das in Abbildung 3 gezeigt wird; |
| Abbildung 3c | ist eine Vorderansicht der Scheibe, die im optischen System, das in Abbildung 3 gezeigt wird, verwandt wird, einschließlich der ersten und zweiten Selektionsblende und dem |

3

Dunkelfleck;

Abbildung 4 ist eine Querschnittsansicht des ausgeführten Kondensor- und Kollimatorsystems, das in der vorliegenden Erfindung verwendet wird;

Abbildung 5 ist ein Längsschnitt des ausgeführten optischen Austrittssystems (exit optics system), das in der vorliegenden Erfindung verwendet wird;

Abbildung 5a ist eine Vorderansicht des hinteren Teils des optischen Austrittssystems und zeigt die Anschlußstücke für die Lichtleitfasern;

Abbildung 6 ist eine Seitenansicht des aufgebauten optischen Systems der vorliegenden Erfindung, wobei das Gehäuse akusto-optischen abstimmbaren Filters im Querschnitt gezeigt wird;

Abbildung 6a ist eine Ansicht des Heizelementes, das in der vorliegenden Erfindung verwendet wird;

Abbildung 6b ist eine Aufsicht auf das aufgebaute optische System, das in Abbildung 6 gezeigt wird, wobei ein Teil der Abdeckung des akusto-optischen Filtergehäuses entfernt wurde;

Abbildung 7 ist ein schematisches Diagramm des elektrischen Systems der elektrooptischen Baugruppe;

Abbildung 8 ist ein schematisches Diagramm des Analogblocks, der in Abbildung 7 gezeigt wird;

Abbildung 8a ist ein schematisches Diagramm der bevorzugten Ausführungsform des Analogblocks in Abbildung 7;

Abbildung 9 ist ein Schnitt durch die erfindungsgemäße Flüssigkeitszelle;

Abbildung 9a ist ein Schnitt längs der Linie B-B in Abbildung 9;

Abbildung 9b ist eine Querschnittsansicht des Leckagedetektors, der in der Flüssigkeitszelle verwendet wird;

Abbildung 10 ist eine Seitenansicht der Flüssigkeitszelle aus Abbildung 9 von außen;

Abbildung 11 ist eine schematische Zusammenstellung der Steuerung, die in der vorliegenden Erfindung verwendet wird;

Abbildung 11a ist ein schematisches Diagramm des in Abbildung 11 dargestellten Hochfrequenz-Synthesizers;

Abbildung 12 ist eine Darstellung Frequenz gegen Intensität, die die akustische Resonanz zeigt; und

Abbildung 12a ist eine Darstellung Frequenz gegen Intensität ohne akustische Resonanz.

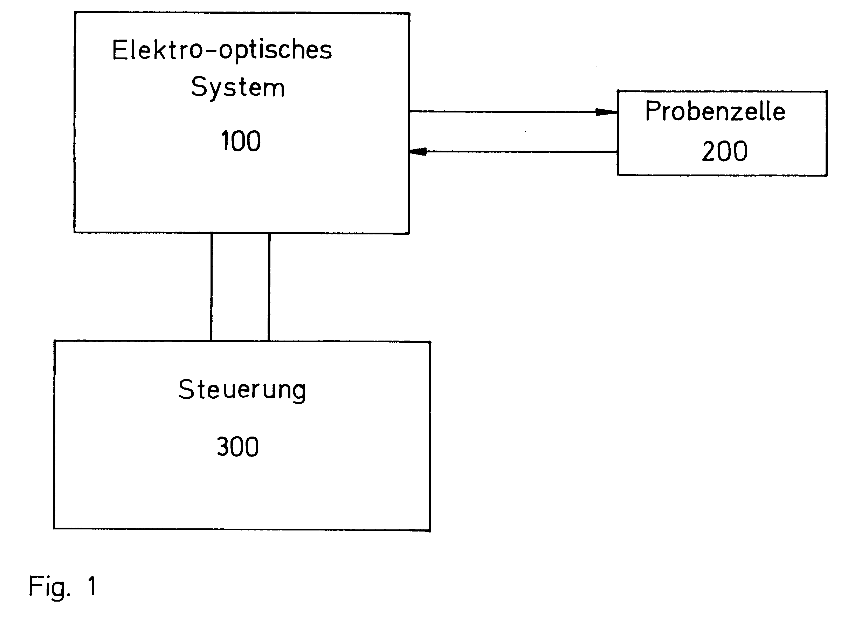

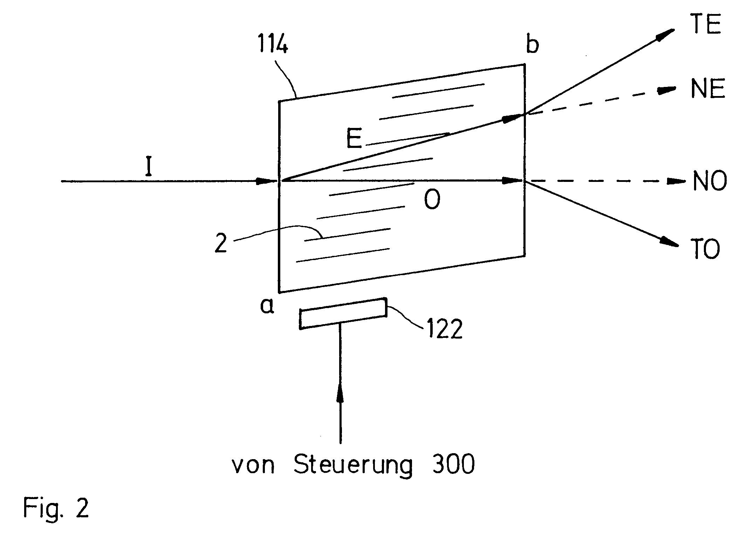

Das akusto-optisch abstimmbare Spektrometer (AOTF) der vorliegenden Erfindung besteht aus einem elektrooptischen System 100, einer Probenzellen 200 und einer Steuerung 300, wie es in Fig. 1 schematisch dargestellt ist. Das akusto-optisch abstimmbare Filter 114 ist schematisch als Parallelogramm in Fig. 2 gezeichnet. Das AOTF 114 ist eine nicht-kolliniare Einheit, die vorzugsweise aus einem doppelbrechenden Tellur-Dioxyd(TeO2)-Kristall besteht. Die in der vorliegenden Erfindung benutzten AOTF werden von Crystal Technology Inc., einer Tochterfirma von Siemens oder von AOTF Technology Inc. zur Verfügung gestellt. Tellur-Dioxyd wird deshalb bevorzugt, weil es eine vorteilhafte Gütekennzahl für akusto-optische Wechselwirkungen aufweist und akustische Scherwellen darin langsam fortschreiten. Die Hohe Gütekennzahl und die langsame Ausbreitungsgeschwindigkeit ermöglicht eine niedrige Ansteuerungsfrequenz. Auch andere Kristalle, wie Lithium-Niobat oder Quarz können benutzt werden. In Beispielen erzeugen ein oder mehrere piezo-elektrische Übertragungseinheiten 122 aus Lithium-Niobat akustische Scherwellen 2 im Kristall. Die akustischen Wellen laufen von der unteren linken Ecke "a" des AOTF zur oberen rechten Ecke "b". In einer nicht kollinearen Einheit ist die einfallende Strahlung fast rechtwinklig zur Front der akustischen Welle. Die Übertragungsvorrichtung 122 wird von Steuerung 300 angesteuert, die weiter unten genauer beschrieben ist.

Wenn parallele Strahlen einer einfallenden Strahlung den AOTF 114 durchlaufen, polarisiert die doppelbrechende Eigenschaft des Kristalls den Strahl in einen ordentlichen Strahl "O", der geradeaus durch den Kristall hindurchläuft, und einen außerordentlichen Strahl "E", der in einem kleinen Winkel zum ordentlichen Strahl "O" gebrochen wird. Dies ist in Fig. 2 übertrieben dargestellt. Zusätzlich wird angenommen, daß die akustischen Scherwellen 2, die im Kristall erzeugt werden, eine akusto-optische Wechselwirkung mit dem Kristall erzeugen, der die Hauptebene des Brechungsindexes im Kristall für bestimmte Wellenlängen verdreht. Dies bewirkt die Polarisation eines engen Wellenlängenbandes des ordentlichen Strahls, das demjenigen des außerordentlichen Strahls "E" entspricht und die Polarisation desselben Wellenlängenbandes des außerordentlichen Strahls, das demjenigen des ordentlichen Strahls entspricht. Die Bandbreite kann ungefähr 3 bis 15 Nanometer betragen und der Strahl mit der speziellen Bandbreite wird als selektiert bezeichnet. Die abgestimmte Bandbreite hängt von der Frequenz der erzeugenden akustischen Welle und von der Gestalt des Kristalls ab.

Wenn der Kristall erregt wird, bleibt die nichtselektierte Bandbreite des ordentlichen Strahls ungebrochen, wie durch Pfeil "NO" gekennzeichnet. Die nicht selektierten Bandbreite des außerordentlichen Strahls wird in ihre ursprüngliche Richtung gebrochen, parallel zum einfallenden Strahl, wie durch den Pfeil "NE" gekennzeichnet ist. Dagegen werden die selektierten Bandbreiten des außerordentlichen und ordentlichen Strahls ungefähr 6 bis 8 weg vom einfallenden Strahl gebrochen, wie durch die Pfeile "TE" und "TO" gekennzeichnet.

EP 0 476 088 B1

Deshalb treten aus dem Kristall zwei unabhängig selektierte Strahlen der gleichen, engen Bandbreite um ungefähr 12 - 16 voneinander abweichend aus. Jeder selektierte Strahl weicht um 6 bis 8° vom nicht-selektierten Licht ab.

Entweder können in der vorliegenden Erfindung zwei unterschiedliche Kristalle benutzt werden, einer, um im Bereich zwischen 800 und 1400 Nanometer zu selektieren und der andere, um im Bereich zwischen 1100 und 2500 Nanometer zu selektieren. Es wird eine Ansteuerfrequenz zwischen 40 und 80 MHz benötigt, um auf die längeren Wellenlängen abzustimmen, während zur Abstimmung der kürzeren Wellenlängen 90 bis 150 MHz benötigt werden. Der ATOF-Kristall hat ein Rauschen von weniger als 1% der abgestimmten Energie.

Das elektro-optische System

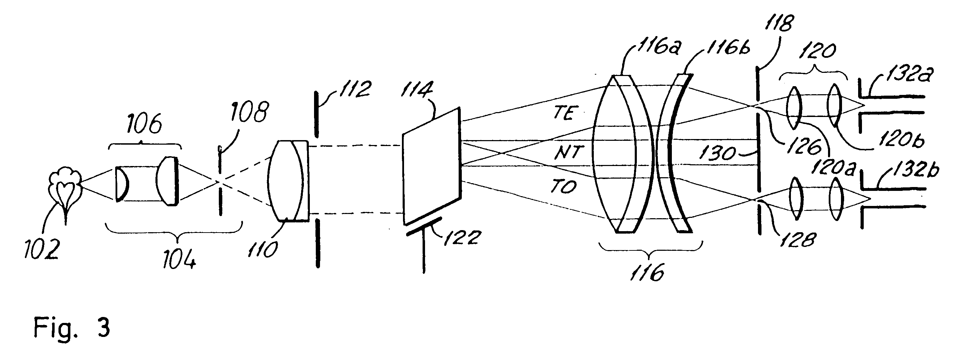

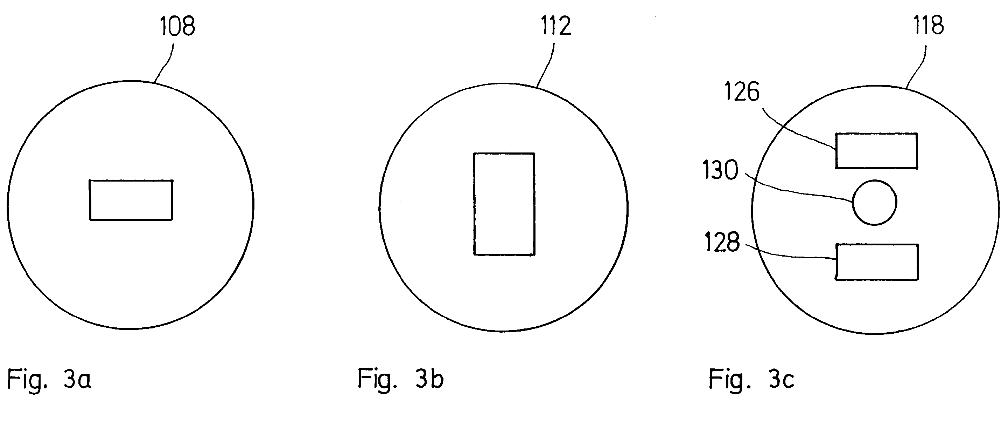

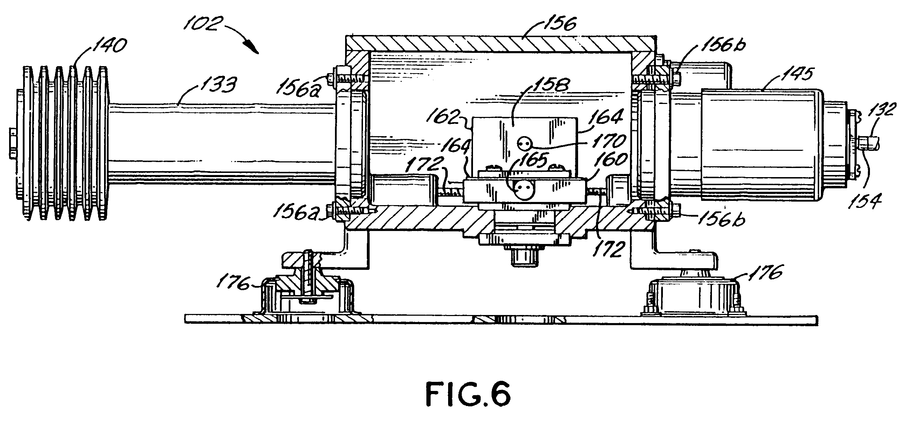

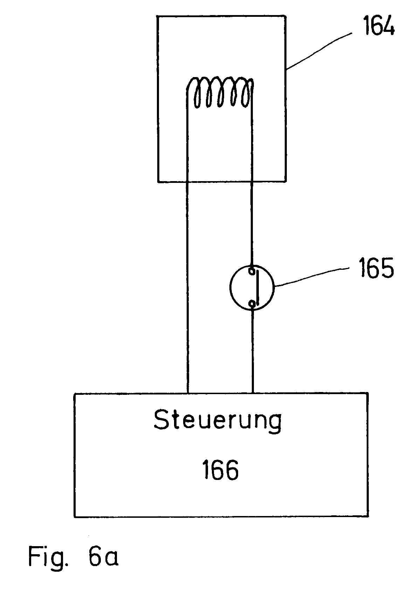

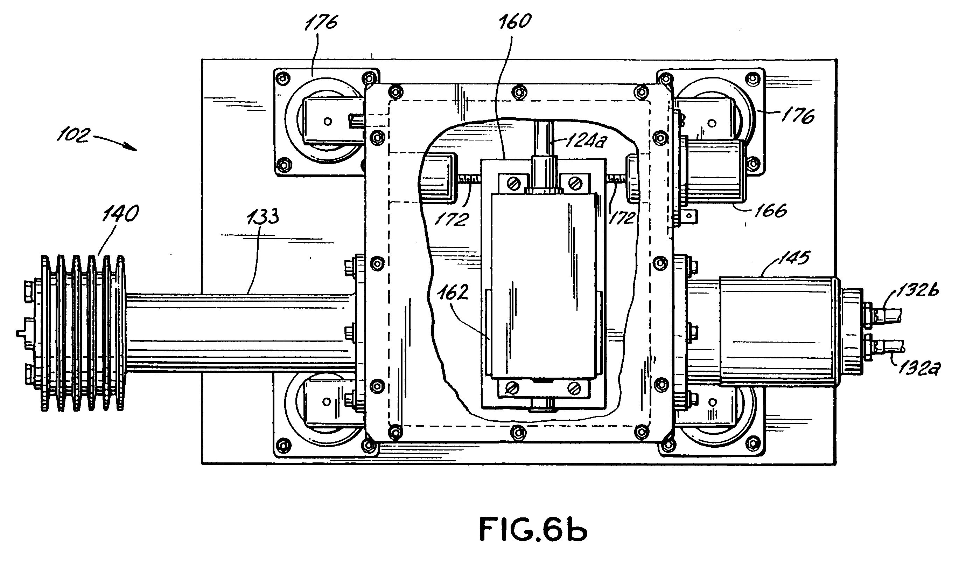

Das universelle zweistrahl-akusto-optische System der vorliegenden Erfindung, das schematisch in Fig. 3 dargestellt ist, trennt, wie oben beschrieben, die beiden selektierten Strahlen. Vorzugsweise besteht das System aus einer Infrarotstrahlungsquelle 102, einem Kondensor-System 104, das eine Blende 108 beinhaltet, einem Kollimator 110, einer zweiten Blende 112, dem akusto-optisch abstimmbaren Filter 114 in Gruppe 158 (Fig 6), einem achromatischen Linsensystem 116, einer Scheibe 118 und einem Paar Kondensatorsysteme 120.

Als Strahlungsquelle wird vorzugsweise eine übliche Wolfram-Halogen-Lampe 102 gewählt. Falls das System etwa zwischen 1,5 bis 2,5 μm betrieben soll, wird zur Verstärkung der Strahleigenschaften der Lampe vorzugsweise innerhalb der Lampe ein goldbeschichteter konzentrischer Reflektor angeordnet, wie in US-A-4 346 383 beschrieben. Erfahrungsgemäß ist er für kürzere Wellenlängen nicht erforderlich.

Die von der Wolfram-Lampe 102 ausgehende Strahlung durchläuft vorzugsweise das Kondensorsystem 104, das ein Paar plankonvexer Linsen 106 mit einer Vergrößerung zwischen 2 bis 1 aufweist. Brauchbar sind die Linsen von Melles Griot, Inc. Die Linsen bündeln das Licht der Wolfram-Lampe 102 in Richtung Blende 108, wie in Fig. 3a gezeigt, die ein rechteckiges Profil besitzt. Die Blende ist 2x4 mm groß. Die lange Achse der Öffnung ist im wesentlichen parallel zur Richtung der erzeugten akustischen Welle. Die Blende 108 bestimmt den Winkelbereich des in den AOTF 114 enfallenden Lichtstrahls. Die Größe der Öffnung hängt ab vom Brechungswinkel der selektierten Strahlen, die vom AOTF 114 austreten, und wird so gewählt, daß die selektierten Strahlen "TE" und "TO", die aus dem AOTF 114 austreten, von der ungebrochenen, nicht selektierten Strahlung, die als "NT" in Fig. 3 gekenntzeichnet ist, getrennt wird. Der Brechungswinkel des benutzten AOTF beträgt ungefähr 6 bis 8°.

Eine Kollimatorlinse 110 wird vorzugsweise vorgesehen, um die Strahlung, die durch die Öffnung 108 hindurchtritt parallel zu richten, bevor die Strahlung in den AOTF 114 eintritt. Um die Streuung des in den AOTF eintretenden Lichts zu minimieren ist es notwendig, daß die Linse sauber, frei von Kratzern und Blasen ist. Die Linse ist ein F2, akromatisches Doppel mit 40 mm Brennweite und 18 mm Durchmesser, wie als Modell Nr. 01LA0037 von Melles in Griot erhältlich. Sie ist ungefähr 36 mm von der Blende 108 entfernt angeordnet. Anstatt der Kollimatorlinse ist es möglich, die Länge des Lichtweges zwischen der Öffnung 108 und dem AOTF 114 so zu vergrößern, daß die Strahlung im wesentlichen parallel ist. Außerdem ist es für weniger anspruchsvolle Anwendungen möglich, auf das Kondensatorsystem zu verzichten und die Lampe 102 an Stelle der Blende 108 zu setzen.

Hinter der Kollimatorlinse 110 ist eine zweite Blende 112 angeordnet, um den in den AOTF 114 eintretenden Strahl zu begrenzen. Der Querschnitt des Strahls sollte geringfügig kleiner als die Größe des Kristalls sein, so daß das Licht von keiner anderen Oberfläche in den AOTF 114 einstreut. Die Abmessungen dieser Blenden betragen 7 x 11 mm. Die Abmessungen der Einfallsfläche der AOTF-Baugruppe 158 sind 8 x 12 mm. Eine Vorderansicht der zweiten Öffnung ist in Fig. 3b gezeigt.

Die den AOTF-Kristall 114 verlassende Strahlung durchläuft das achromatische Linsensystem 116, das aus einer achromatischen Objektivlinse 116a und einer durch Luft getrennten aplanaren meniskusförmigen Linse 116b besteht. Die Durchmesser der Linsen betragen 30 mm, was groß genug ist, um die Strahlen zu bündeln. Die Linsen müssen lichtstark sein und haben deshalb eine niedrige F-Zahl. Das ausgewählte System ist F2, wobei die Brennweite das Doppelte des Durchmessers beträgt. Die vorderseitige Brennweite der Linse liegt im wesentlichen in der Austrittsebene des Kristalls, so daß der Hauptstrahl des Systems parallel zur optischen Achse die Linsen des Systems verläßt. Die erste Linse liegt etwa 45 mm von der Endfläche des Kristalls entfernt. Diese Linsen sind ebenfalls von Melles Griot, Modell Nr. 01 LAO 7a bzw. 01 LAM 155 erhältlich.

Die nicht-selektierte Strahlung wird durch die Linse entlang der optischen Achse des Systems fokussiert, während die beiden selektierten Strahlen symmetrisch auf gegenüberliegenden Seiten der optischen Achse fokussiert werden. Jeder Strahl wirft ein Bild der Öffnung 108.

Wie in Fig. 3c gezeigt, weist die Scheibe 118 zwei Öffnungen für den selektierten Strahl auf, die die gleichen Abmessungen wie die Öffnung 108 haben. Je ein selektierter Strahl ist auf je eine Schablone fokussiert.

5

Im Zentrum der hinter dem Filter angeordneten Feldschablone befindet sich ein schwarzer Fleck 130, der aus optisch schwarzer Farbe besteht, beispielsweise NEXTEL C101 von 3M. Die nichtselektierte Strahlung wird auf diesen schwarzen Fleck 130 fokussiert, wo sie absorbiert wird. Die Öffnungen für die selektierten Strahlen sollten symmetrisch zur optischen Achse des Systems angeordnet werden, im wesentlichen in der Ebene, in der die akustischen Wellen eingeleitet werden. Die Feldschablone ist 35 mm hinter den Linsen 116b angeordnet. Hinter jeder Feldschablone 126, 128 befindet sich ein kleines Kondensatorsystem 120, das aus symmetrischen konvexen Linsen 120a und plankonvexen Linsen 120b besteht. Diese Linsen bündeln die selektierten Strahlen auf die optischen Leiter 132a und 132b. Um die Absorbtion von infraroter Strahlung in den optischen Leitern selbst zu verringern, weisen die Leiter vorzugsweise einen geringen OH-Wert auf. Solche Leiter sind z.B. von Fiberguide Industries, Inc. erhältlich.

Ein wesentliches Merkmal der vorliegenden Erfindung liegt in der Möglichkeit, jeden der selektierten Strahlen unabhängig voneinander zu bündeln, indem jeder Strahl auf eine getrennte Blende fokussiert wird. Auf diese Weise bedarf es keiner Polarisieratoren, wie im Stand der Technik, um die Strahlen herauszufiltern, die nicht zur Analyse benutzt werden. Die Polarisatoren sind teuer, ihr Gebrauch im Zusammenhang mit doppelbrechenden Kristallen vergeudet die Hälfte der Energie, die zur Analyse brauchbar wäre. Durch die Nutzbarmachung des zweiten selektierten Strahls, der einen nahezu identischen optischen Weg wie der zur Analyse benutzte Strahl durchläuft, kann bei niedrigeren Kosten als im Stand der Technik eine bessere Korrektur des Signalrauschens erzielt werden.

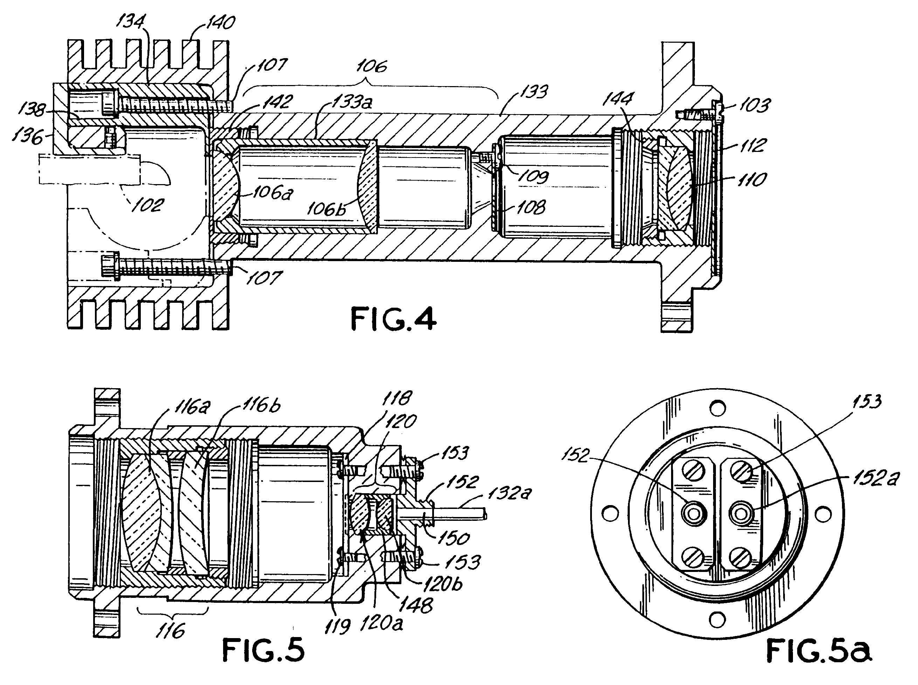

Das effektiv verwendete Kondensor- und Kollimatorsystem wird in Abbildung 4 im Querschnitt mit den entsprechenden Bestandteilen aus Abbildung 3, die mit denselben Nummern versehen sind, gezeigt. In Abbildung 4, die gegenüber der Ausrichtung in Abbildung 3 90 Grad um die optische Achse gedreht ist, gibt es einen Systemrahmen 133, der die Bestandteile trägt. Eine Lampenhalterung 134 ist für die Lampe 102 vorgesehen. Ein Lampenträger 136 faßt die Lampe, deren Position mit einer Zentriervorrichtung 138 verändert werden kann. Rippen zur Wärmeabstrahlung umgeben die Lampenhalterung 134 von außen, um eine Überhitzung der Lampe zu verhindern. Ein Haltekeil 142 liegt zwischen der Lampenhalterung 134 und dem Kondensor 106, die durch die Bolzen 107 miteinander verbolzt sind. Das Kollimator-Objektiv 110 liegt in einem Halter 144, der am Rahmen 133 festgeschraubt ist. Die Lage des Objektivs kann eingestellt werden, indem der Halter gedreht wird. Der Bolzen 109 befestigt die erste Blende 108 am Inneren des Rahmen 133, während der Bolzen 113 die zweite Blende 112 befestigt.

Abbildung 5 zeigt das optische System hinter dem AOTF 114, das als das optische Austrittssystem 145 bezeichnet wird und das auch gegenüber der Ausrichtung in Abbildung 3 90° um die optische Achse gedreht ist. Der Achromat 116 liegt in einem Halter 146, dessen Lage man auf dieselbe Weise durch Drehung einstellen kann wie die des Kollimator-Objektivs 110. Das Kondensorsystem 120 liegt in einem unbeweglichen Halter 148. Die Bolzen 119 befestigen den Gegenhalter (back stop) hinter dem Filter an seiner Position.

Das Kondensorsystem 120 fokussiert den einfallenden abgestimmten Strahl in den Bereich 150, der zu einem Lichtleitfaser-Anschlußstück 152 führt, das die Verbindung zur Lichtleitfaser 132a herstellt. Das zweite Kondensorsystem und der (zweite) Lichtleitfaseraufbau liegen hinter denen, die in Abbildung 5 gezeigt werden. Abbildung 5a ist eine Ansicht des hinteren Teils des optischen Systems aus Abbildung 5 und zeigt die beiden Lichtleitfaser-Anschlußstücke 152 und 152a.

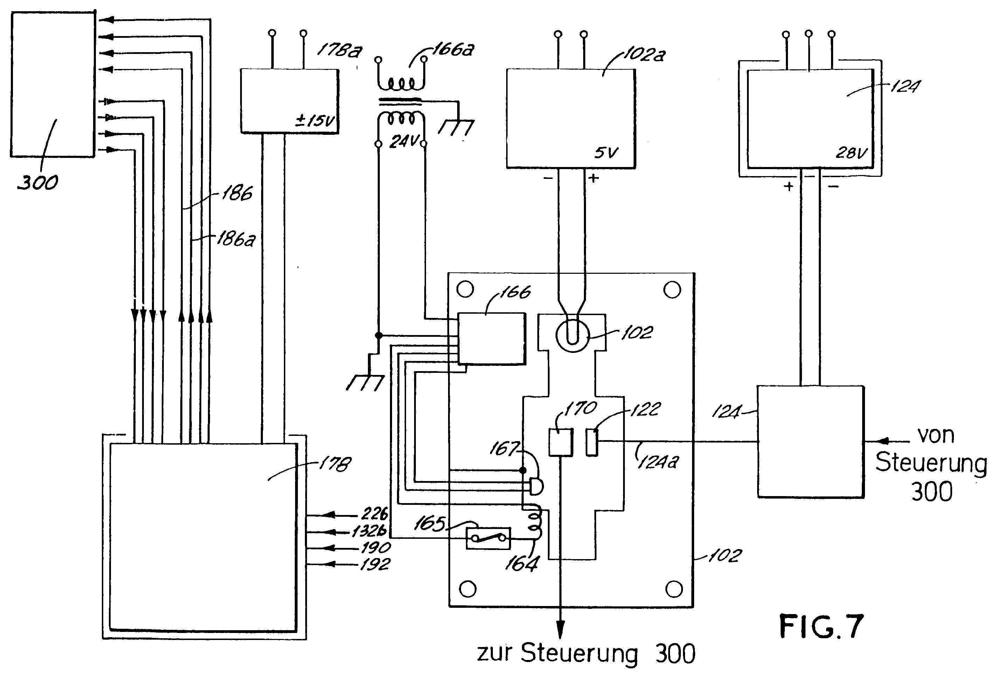

Die Bolzen 153 befestigen die Anschlußstücke 152 und 152a an ihrem Platz. Abbildung 6 ist eine Seitenansicht des akusto-optischen Systems 102 und zeigt den Kondensor-/Kollimatorsystem-Rahmen von außen und das optische Austrittssystem 145 von außen, die mit dem AOTF-Rahmen 156 durch die Schrauben 156a und 156b verschraubt sind. Der AOTF-Rahmen wird im Querschnitt gezeigt. Das AOTF-Modul 158, das den AOTF 114 und die Wandler 122 enthält, liegt auf einem Sockel 160. Das Modul 158 wird vom Hersteller versiegelt geliefert. Es hat die jeweiligen Eintritts- und Austrittsöffnungen 162 und 164, um die Strahlung passieren zu lassen. Die Öffnungen sind 8 mm x 12 mm groß. Zwischen dem Sockel 160 und dem AOTF-Modul 158 befindet sich ein Heizelement 164, das bei Minco Products, Inc. erhältlich ist und das die Temperatur des AOTF-Moduls 158 hält. Unter dem Heizelement 164 befindet sich im Sockel 160 ein Thermoschalter 165, um eine Überhitzung zu vermeiden. Das Heizelement mit den Heizschlangen 164a wird in Abbildung 6a detaillierter dargestellt. Eine Regeleinrichtung 166 steuert den Betrieb des Heizelementes 164. Abbildung 6b ist eine Aufsicht auf das akusto-optische System 102, wobei die Abdeckung des AOTF-Rahmens 156 teilweise entfernt wurde, und zeigt die Regeleinrichtung 166 für das Heizelement 164. In Abbildung 7 wird ein Temperaturfühler 167 gezeigt, der mit der Regeleinrichtung für das Heizelement verbunden ist. Das Heizelement ist in der Lage, die Temperatur des Kristalls innerhalb von einem Grad Celsius (über oder unter) der gewünschten Temperatur, die zwischen 40 und 50 Grad Celsius betragen kann, zu halten.

Zurück zu Abbildung 6: innerhalb des AOTF befindet sich ein Temperaturfühler 170, der die Temperatur des AOTF 114 an die Regeleinrichtung 200 übermittelt. Die Justierschrauben 172 ermöglichen es, die Lage des Moduls 158 per Drehung einzustellen. Der Sockel 160 befindet sich auf dem Boden des Rahmen 156, der von vier Stoßdämpfern 176, die bei der Lord Inc. erhältlich sind, getragen wird.

Die Lichtleitfasern 132a und 132b, die in Abbildung 6b dargestellt werden, wie sie das optische Austrittssystem 145 verlassen, laufen in demselben Kabel (nicht abgebildet) zur Probenzelle 200, die weiter unten erörtert wird. Sie laufen auch im selben Kabel von der Probenzelle zu den Detektoren. Es wird erwartet, daß dadurch, daß die Lichtleitfasern eng benachbart zueinander im selben Kabel gehalten werden, Abweichungen bei unterschiedlicher Temperatur, die den einen abgestimmten Strahl beeinträchtigen könnte , den anderen in ähnlicher Weise beeinträchtigen. Daher kann das Rauschen der Lichtleitfasern wirksam korrigiert werden.

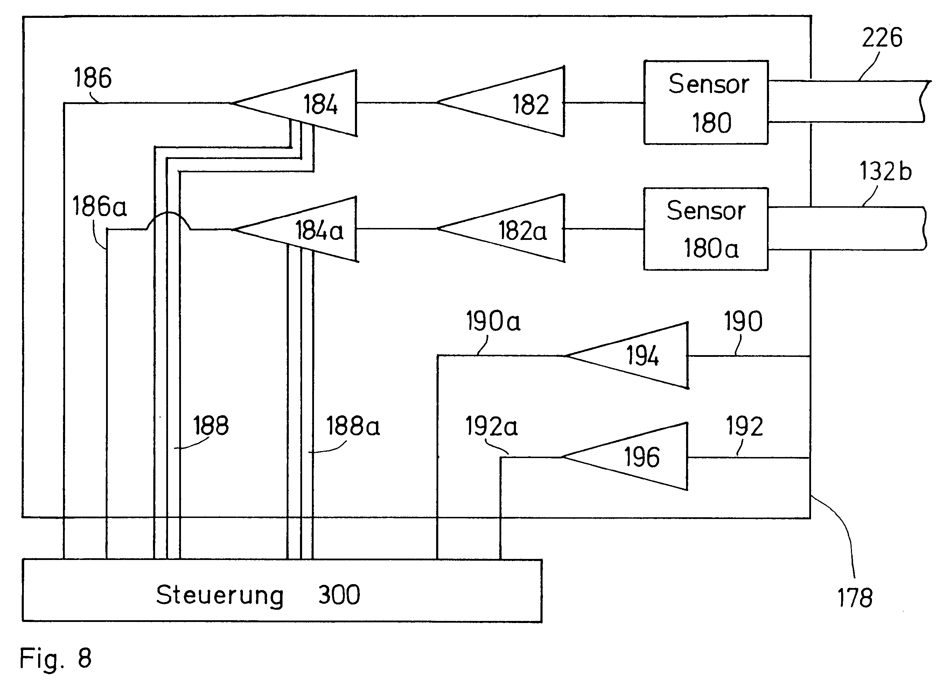

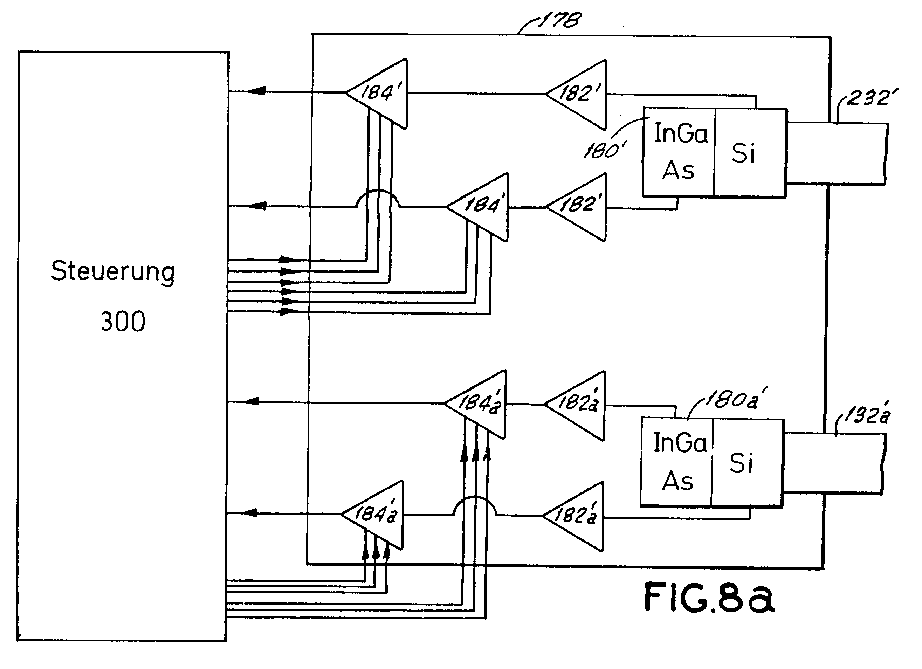

Die elektrischen Bestandteile des elektrooptischen Systems 100 werden in den Abbildungen 7 und 8 dargestellt. In Abbildung 7 betreibt der HochfrequenzVerstärker 124 die Meßwandler 122 innerhalb des optischen Systems 102. In Abbildung 6b wird ein Kabel 124a dargestellt, das mit dem AOTF-Modul 158 verbunden ist und die Leistung des Hochfrequenz-Verstärkers auf die Wandler 122 überträgt. Eine Stromversorgung 124b mit 28 Volt liefert dem Verstärker 124 Energie. Die Lampe 102 wird von einer Stromversorgung 102a mit 5 Volt mit Energie versorgt. Das Heizelement 164, der Thermoschalter 165 und die Temperaturregeleinrichtung 166 werden mit ihrer Wechselstromversorgung 166a dargestellt. Der Thermofühler 170 wird mit dem Ausgang, der zur Regeleinrichtung führt, dargestellt.

Ein Analogblock 178 wird mit einem Eingang 226 dargestellt, die die Lichtleitfaser ist, welche das Strahlenbündel, das die Probe belichtet, überträgt. Der Eingang 132b ist die Lichtleitfaser, die den Vergleichsstrahl überträgt. Der Eingang 190 ist die vom Temperaturfühler 170 in das AOTF-Modul 158, und der Eingang 192 ist die von einem Temperaturfühler 246 in die Probenzelle 200, die weiter unten erörtert wird.

Die Ausgangsleitungen 190a und 192a übertragen Signale von den Temperaturfühlern 170 und 246 zur Regeleinrichtung 300. Die Ausgangsleitungen 186 und 186a übertragen Daten von den Lichtleitfasern 226 und 132 dementsprechend, wie es weiter unten erörtert wird. Der Analogblock 178 wird von der Stromversorgung 178a mit Energie versorgt. Die Konstruktionseinzelheiten des Analogblocks werden in den Abbildungen 8 und 8a genauer dargestellt.

In Abbildung 8 werden die Detektoren 180 und 180a, vorzugsweise Photodioden aus Indium-Galliumarsenid, dargestellt, die an die Vorverstärker 182 und 182a und die Regelverstärker 184 und 184a angeschlossen sind, deren Ausgänge 186 und 186a zur Regeleinrichtung 300 zum Zwecke der Analyse führen. Die Regelverstärker werden über die Eingangsleitungen 188 und 188a durch die Regeleinrichtung 300 gesteuert. Wenn das Signal, das von der Regeleinrichtung 300 von den Regelverstärkern 184 oder 184a empfangen wird, unter einem vorbestimmten Niveau ist, steigert die Regeleinrichtung 300 die Verstärkung der Verstärker 184, 184a, so daß das Signal für die Auflösung ausreicht. Abbildung 8 zeigt sechs Eingangsleitungen 188 und 188a von der Regeleinrichtigung, die die Eingänge zu den Regelverstärkern darstellen. Die Indium-Galliumarsenid-Detektoren sind bei der Epitaxx Inc. erhältlich, Modell Nummer ETX 1000. Detektoren aus Germanium können auch verwendet werden.

Indium-Galliumarsenid-Detektoren sind in einem Bereich von 900-1700 Nanometern wirksam. Um den Wellenlängenbereich, der vom AOTS 1 ermittelt werden kann, auszudehnen,wird es vorgezogen, einen Doppeldetektor,der aus einer Doppelschicht aus Indium-Galliumarsenid und Silikon besteht und einen wirksamen Bereich von 400-1100 Nanometer hat, einzusetzen. Die Detektoren werden in dieselbe Photodiode plaziert, wobei der Silikondetektor oben ist. Damit sie mit den Lichtleitfasern, die einen Durchmesser von 1 mm haben, zusammenpassen, sollte der Indium-Galliumarsenid-Detektor einen Durchmesser von 1-2 mm haben, während der Silikondetektor einen Durchmesser von 2-3 mm haben sollte. Ein derartiger Doppeldetektor ist auch bei der Epitaxx, Inc. als Modell Nummer 2000 si erhältlich. Ein Teilschema der Schalttechnik, die mit einem Doppeldetektor verwendet wird, wird mit den entsprechenden Bestandteilen, deren Ziffern mit Strick gekennzeichnet sind, in Abbildung 8a dargestellt.

Die Detektoren werden auf demselben Aluminiumträger auf der Analogschaltungskarte (analog card), die dem Analogblock 178 entspricht, angebracht. Da sie sich in derselben Umgebung befinden, haben sie etwa dieselben Temperaturen. Ein Temperaturregler kann zwecks größerer Präzision bereitgestellt werden, um die Temperatur der Detektoren auf demselben Niveau zu halten.

Abbildung 8 zeigt auch die Eingabe 190 vom Temperaturfühler 170 auf das AOTF-Modul 158 und die Eingabe 192 vom Temperaturfühler zur Probenzelle 200, die weiter unten erörtert wird. Diese Eingaben werden durch die Verstärker 194 und 196, deren Ausgaben zur Steuerung 300 führen, verstärkt.

Die Flüssigkeitszelle

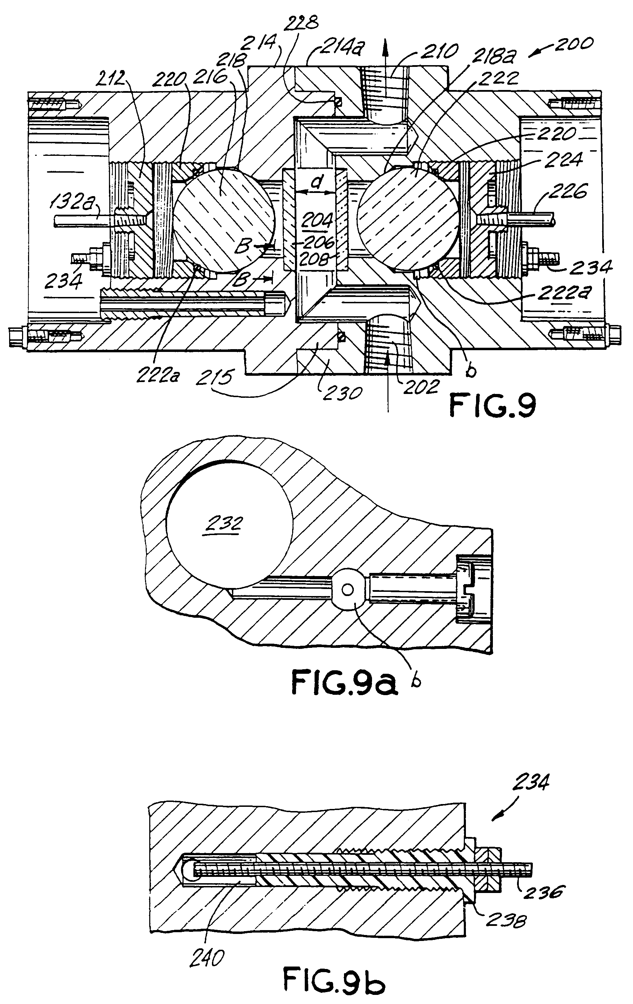

Die Flüssigkeitszelle 200 der vorliegenden Erfindung verfügt über eine einzigartige Konstruktion mit breiter Anwendbarkeit. Abbildung 9 zeigt eine Querschnittsansicht der Zelle 200, die zwei Hauptteile hat, die Gehäuse 214 und 214a. Die zu testende Probe tritt in die Zelle durch ein Rohr bei 202 ein. Der Weg nimmt zwei Biegungen um 90 Grad, um die Probe in den Analysebereich 204 zu bringen, wo sie einem abgestimmten Strahlenbündel ausgesetzt wird. Der Analysebereich wird von zwei transparenten, parallelen Fenstern 206 und 208 begrenzt, die vorzugsweise Saphirscheiben sind. Der Weg nimmt zwei weitere Biegungen um 90 Grad und verläßt die Probenzelle bei 210. Vorzugsweise sollte die Probe sich aufwärts bewegen, um die Bildung von Blasen zu vermeiden.

Die Strahlung zum Testen der Probe tritt in die Zelle 200 durch das Lichtleitkabel 132a, das an einer vorderen Faseroptikkupplung 212 befestigt ist, ein. Die Kupplungsschrauben an einem Gewindeabschnitt 215 des Zellengehäuses 214 und ihre Lage lassen sich durch Drehen einstellen. Die Strahlung muß parallel ausgerichtet werden, um zu gewährleisten, daß die Strahlung auf die Probe fällt. Dies erleichtert nach ihrem Einwirken auf die Probe auch das Auffangen der Strahlung. Bei Probenzellen nach dem bekannten Stand der Technik wurden Kollimator-Objektive benutzt. Man hat jedoch herausgefunden, daß eine Glaskugel 216 von geeigneter Größe die Parallelausrichtung ebenso gut oder besser erbringt als konventionelle Objektive, und zwar bei geringeren Kosten. Darüber hinaus ist der Aufbau der Probenzelle 200 mit Glaskugeln leichter als mit Objektiven, da es keine Ausrichtungsprobleme gibt. Die Kugel kann einfach auf ihre Position gesetzt werden und wird von der Randleiste 218 des Zellengehäuses 214 getragen. Ein Halter 220 befestigt die Kugel 216 an ihrem Platz, und eine O-Ring-Dichtung 222a verhindert das Einsickern von Probenflüssigkeit, wenn es ein Leck gibt. Bei der vorliegenden Anwendung hat die Glaskugel einen Durchmesser von ca. 25,4 mm. Die optimale Kugelgröße für diese Größe der Lichtleitfaser wurde durch ein Programm zur Berechnung des optischen Strahlengangs wie z.B. Optec II von Scioptics bestimmt. Geeignete Kugeln sind bei der Imetra, Inc. erhältlich.

Das parallel ausgerichtete Licht bewegt sich durch die erste Saphirscheibe 206 und wirkt auf die Probe ein. Strahlung, die durch die Probe übertragen oder verstreut wird, bewegt sich durch die zweite Saphirscheibe 208 und durch eine zweite Glaskugel 222, die mit der ersten identisch ist. Die Glaskugel 222 fokussiert die Strahlung in ein Auffangmittel, vorzugsweise das Lichtleitkabel 226 in der Kupplung 224. Die Glaskugel 222 ruht auf der Randleiste 218a des Gehäuses 214a. Der Halter 220 befestigt sie an ihrem Platz und sie ist mit dem O-Ring 222a versiegelt.

Die Gehäuse 214 und 214a sind durch die Randleisten 215 und 230 miteinander verschraubt. Die beiden Gehäuse können leicht getrennt werden, wodurch der Analysebereich 204 und der Probendurchflußweg für eine direkte Reinigung freigesetzt wird. Dies ist ein Hauptvorteil gegenüber den Probenzellen des bekannten Standes der Technik, die im allgemeinen nur dadurch gereinigt werden können, daß der Durchflußweg der Probe gespült wird. Eine O-Ring-Dichtung 228 versiegelt die Probenzelle gegen Lecks zwischen den Gehäusen.

Die Tiefe "d" des Analysebereichs 204 hängt von der Probe, die getestet werden soll, ab und kann je nach Probe zwischen etwa 0,10 - 100 mm variieren. Für Proben wie zum Beispiel Käse oder Schokolade, die eine übermäßige Streuung verursachen und das Auffangen von hinreichender Strahlung zur Bestimmung nützlicher Daten verhindern, wird eine engere Zelle bevorzugt. Für Bier oder organische Bestandteile wie zum Beispiel Benzin, die nicht genügend Strahlung streuen, daß es die Analyse stören würde, würde eine größere Probenzelle bevorzugt.

Die Probenzelle kann leicht in verschiedenen Größen hergestellt werden, indem lediglich die Höhe der Randleisten 230 und 215 verändert wird.

Die Probenzelle der vorliegenden Erfindung schließt die Leckdetektoren 234 ein, die den Sickerverlust von Proben-(flüssigkeit) quer über die Saphirscheiben 206 und 238 nachweisen. Die Detektoren werden in Abbildung 9 von oben dargestellt.

Abbildung 9a zeigt einen Querschnitt des Leckdetektors 234, der aus einem mit einem Gewinde versehenen Stahlstab 236, der von einer Plastikhülse 238 umgeben ist, besteht. Der Stab 236 und die Hülse 238 befinden sich in einem Bohrung 240 mit einer Verbindungsmöglichkeit mit dem Bereich "b". Abbildung 9b ist eine Ansicht längs der Linie B - B und zeigt den Bereich b. Ein Draht von dem elektrooptischen System 100 ist an einer Schraube 242 befestigt, der oben am Stab 236 bei einer offenen Leitung aufgeschraubt ist. Wenn Proben-(flüssigkeit) in den Bohrung 240 sickert und mit dem Stab 236 in Berührung kommt, entsteht beim Stab ein Kurzschluß. Dies wird von der Steuerung 300 dementsprechend, wie es weiter unten erörtert wird, ermittelt. Die Steuereinrichtung 300 kann zum Beispiel durch ein Licht oder ein Alarmsignal anzeigen, daß ein Leck vorhanden ist.

Die Probenzelle 200 umfaßt auch einen Temperaturfühler, der durch das elektrooptische System 100 an die Regeleinrichtung 300 angeschlossen ist. Siehe Abbildung 7. Schwankungen der Probentemperatur können seine Extinktion verursachen, und die Regeleinrichtung kann dies korrigieren, indem sie die Anzeige der Extinktion anpaßt oder die Konstante in der Konzentrationsgleichung verändert, was weiter unten erörtert wird.

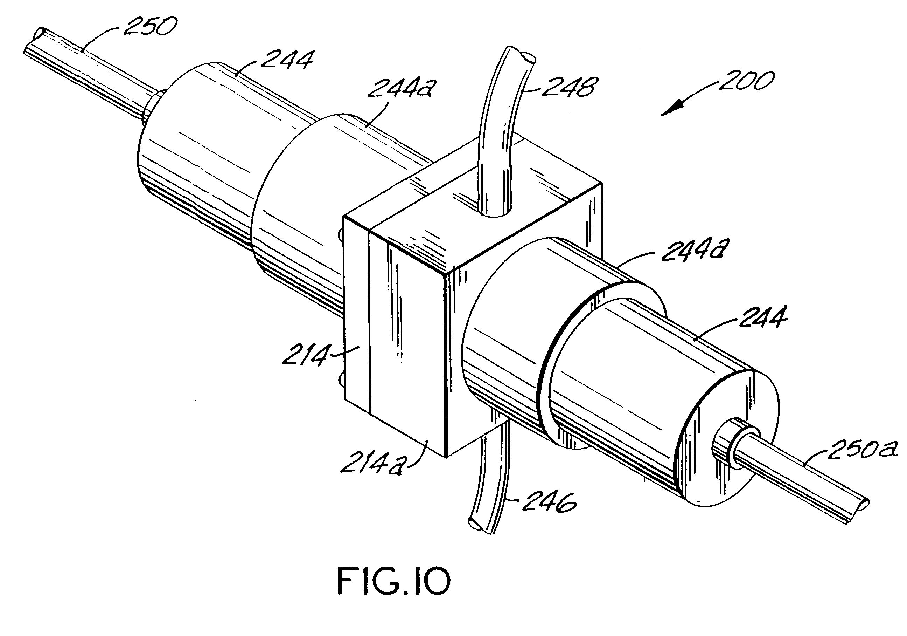

Abbildung 10 ist eine Seitenansicht der Probenzelle 200 der vorliegenden Erfindung von außen. Ein Kabel 250 überträgt die Lichtleitfasern 132a und 132b. Die Lichtleitfaser 132b bewegt sich an den Probenzelle vorbei, während die Lichtleitfaser 132a in die Zelle eintritt. Das Kabel 250a überträgt die Lichtleitfasern 226 und 132b zu den Detektoren 180 und 180a. Die Temperatur der Fasern kann im wesentlichen auf demselben Niveau gehalten werden, weil die Lichtleitfasern in dasselbe Kabel eingeschlossen sind. Das Kabel 250 ist von metallenen Panzern 244 und 244a umgeben .

Die Probenzelle ist eine getrennte Einheit, die leicht bewegt und in den Fluß einer Probe eingeschleift werden kann. Sie wird zum Beispiel für die On-Line-Überwachung von Proben während eines Fertigungsprozesses eingesetzt. Die Probenzelle kann sich in jeder gewünschten Entfernung von dem elektrooptischen System 100 oder der Steuerung 300 befinden. Es ist oft wünschenswert, die Probenzelle 200 von dem übrigen System abzusondern, wenn man es mit gefährlichen Proben wie zum Beispiel Benzin zu tun hat.

Die Steuerung

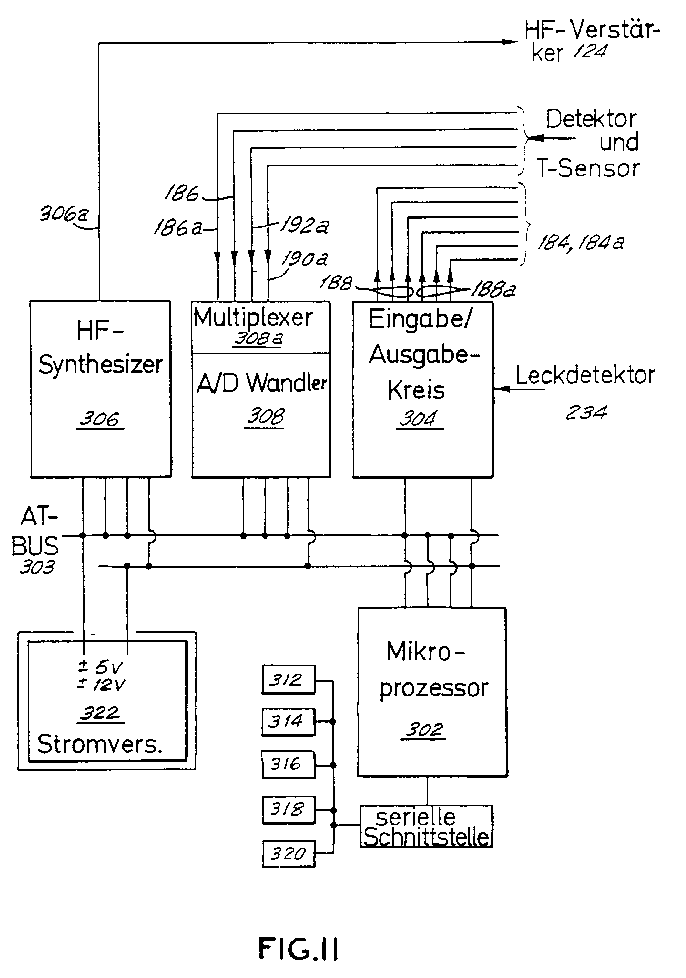

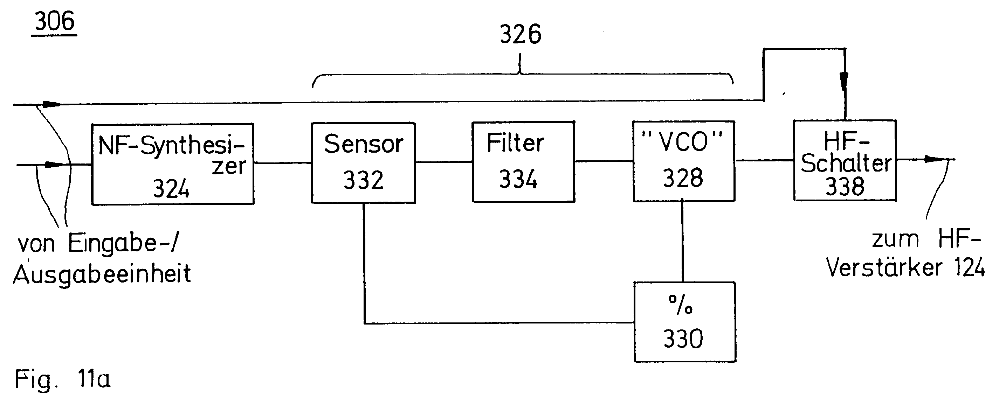

Die Regeleinrichtung 300 besteht aus einem Mikroprozessor 302, einem Eingabe-/Ausgabekreis 304, einem Hochfrequenz-Synthesizer 306 und einem Analog/Digital-Umsetzer 308 mit einer Multiplexer 308a, die in Abbildung 11 schematisch dargestellt sind. Auch die Stromversorgung 322 wird gezeigt. Jeder dieser Bestandteile steht mit den anderen über den AT BUS 303 in Verbindung. Der Mikroprozessor 302, wie zum Beispiel der Intel 80286 oder 80386, mit einem möglichen Co-Prozessor 80287 oder 80387, steuert den AOTF 114 durch den digitalen Eingabe-/Ausgabekreis 304 und den Hochfrequenz-Synthesizer 306. Die Leistung 306a des Hochfrequenz-Synthesizers 306 wird durch den Hochfrequenz-Verstärker 124 im elektrooptischen System 100 verstärkt. Siehe Abbildung 7. Der Eingabe-/Ausgabekreis 304 ist eine IBM-kompatible Eingabe-Ausgabe-Steckkarte, die zum Beispiel bei der Industrial Computer Source erhältlich ist.

Dem Mikroprozessor 302 werden Daten vom elektrooptischen System 200 über die Multiplexvorrichtung 308a des Analog-Digital-Wandlers eingegeben. Vier Eingaben werden dargestellt. 186 und 186a sind von den Detektoren 180 und 180a. 192 und 192a sind von den beiden Temperaturfühlern 170 und 246. Wenn Doppeldetektoren benutzt werden, wären zwei zusätzliche Eingänge zur Multiplexvorrichtung 308a vorhanden. Der Analog-Digital-Wandler ist eine IBM-kompatible, 16-bit-Analog-Digital-Wandler-Steckkarte, die eine Multiplexvorrichtung umfaßt, und ist zum Beispiel bei der Analog Devices, Inc. erhältlich.

Der Mikroprozessor 302 steuert die Regelverstärker 184, 184a im Analogblock 174 auch durch den digitalen Eingabe-/Ausgabekreis. Wenn die Signale, die der Mikroprozessor 302 von den Detektoren 180, 180a empfängt, für eine angemessene Auflösung zu gering sind, steigert der Mikroprozessor 302 die Verstärkung durch die Regelverstärker 184, 184a. Wenn die Doppeldetektoren verwendet werden, gäbe es sechs zusätzliche Ausgänge bei den Regelverstärkern. Der digitale Eingabe-/Ausgabekreis 304 kann auch einen Kurzschluß im Leckdetektor 234 finden und gibt diese Information an den Mikroprozessor 302 weiter.

Ein Sichtanzeigegerät 312 zur Anzeige der Prozentsätze der Konzentration und ein Tastenfeld 314 für den Fernzugriff auf die Steuerung sind eingeschlossen. Sie sind über eine serielle Schnittstelle an den Mikroprozessor angeschlossen, wie zum Beispiel ein RS232 oder RS422, welche bei Metrabyte erhältlich sind. Es wird auch eine Stromversorgung 322 gezeigt.

Auf Wunsch kann ein ROM 16 für das Einschalten ohne Diskette beinhaltet sein. Als Alternative kann ein Laufwerk 318 enthalten sein. Andere Möglichkeiten schließen eine Tastatur 320 zum Programmieren und eine Bildausgabe 322 ein.

Um den AOTF auf einer bestimmten Frequenz zu betreiben, damit ein bestimmtes Wellenlängenband abgestimmt wird, erzeugt der Mikroprozessor 302 eine 24 Bit-Binärzahl, die aus einer Tabelle ausgewählt wird. Sie könnte auch durch eine Gleichung festgelegt werden. Diese Nummer wird dem Hochfrequenz-Synthesizer über den Eingabe-Ausgabekreis 304 eingegeben. Der Hochfrequenz-Synthesizer 306 besteht vorzugsweise aus einem Niedrigfrequenz-Synthesizer 324 und einem Hochfrequenz-PLL-Kreis 326, wie es in Abbildung 11a dargestellt ist. Der PLL-Kreis 326 besteht aus einem spannungsgeregelten Oszillator ("VCO") 328, einem Frequenzteiler 330, einem Phasendetektor 332 und einem Filter 334.

Der Niedrigfrequenz-Hochfrequenz-Synthesizer 306a ist ein Modell DDS von der A & A Engineering, das eine Frequenz bis zu 6,5 MHz erzeugen kann. Für den Antrieb des AOTF sind jedoch etwa 75 bis 200 MHz erforderlich, daher wird ein PLL-Kreis 324 eingesetzt, um die erforderliche Frequenz zu erzeugen. Der VCO 328 erzeugt eine Hochfrequenz zwischen 75 und 200 MHz, die im Frequenzteiler 330 durch 64 geteilt wird. Die Leistung des Frequenzteilers 330 liegt innerhalb des Frequenzbereichs des Niedrigfrequenz-Synthesizers 306a. Der Phasendetektor 332 vergleicht die Frequenz vom Hochfrequenz-Synthesizer 306a mit der des Frequenzteilers 330. Wenn eine Differenz vorhanden ist, wird der VCO 328 eingestellt, bis er paßt. Der Hochfrequenz-Ausgang 336 des VCO 328 führt zum Hochfrequenz-Schalter 338, der vom Mikroprozessor 302 über den Eingabe -/Ausgabekreis 304 gesteuert wird. Das Signal vom Hochfrequenz-Schalter 338 wird vom Hochfrequenz-Verstärker 124 im elektrooptischen System 100 verstärkt, um den AOTF 124 zu betreiben. Der VCO 328 kann ein Motorola MC1648 sein. Der Phasendetektor 332 kann ein Motorola 4044 mit einer Obergrenze von 8 MHz sein.

Anstatt des Niedrigfrequenz-Synthesizers und dem PLL könnte ein Hochfrequenz-Synthesizer verwendet werden, aber dies wäre sehr viel teurer. Das vorliegende System ist auf ca. 100 Hertz präzise und sehr schnell, es ermöglicht ein Umschalten zwischen Frequenzen in weniger als etwa 100 Mikrosekunden mit einer Schnelligkeit von ca. 30 Mikrosekunden.

Während des Betriebs analysiert das AOTS 1 eine Probe quer durch ein Programm von Wellenlängen, das Abtastung genannt wird. Die Abtastung kann aus mehreren Schlüsselwellenlängen oder dem vollständigen Spektrum zwischen ca. 800 und 1700 nm bestehen, je nach Anwendung und den Erfordernissen des Benutzers. Es kann auch eine Abtastung zufällig gewählter Wellenlängen durchgeführt werden. Wie bereits oben erörtert, erzeugt der Mikroprozessor 302 einen 24-Bit-Binärcode, der vom Hochfrequenz-Synthesizer 306 in eine Frequenz umgewandelt wird. Diese Frequenz treibt den AOTF an und stellt ihn ein, um das bestimmte Wellenlängenband, das auf die Probe angewendet wird, auszuwählen. Nach dem Test wird ein weiterer 24-Bit-Code erzeugt, der der nächsten Frequenz und somit dem nächsten Wellenband entspricht. Dies wiederholt sich, bis alle Codes, die den in einer Abtastung zu prüfenden Wellenlängen entsprechen, erzeugt worden sind. Normalerweise werden in einer Abtastung etwa 20 Wellenlängen getestet, was in einem Zeitraum von 0,001 Sekunden durchgeführt werden kann.

Während einer Abtastung macht Rauschen zahlenmäßig etwa 150 mikro-optische Dichte aus. Um die Präzision zu erhöhen, wird eine Abtastung vorzugsweise 100 Mal wiederholt, und aus den Ergebnissen wird der Durchschnitt gebildet. Bei 100 Abtastungen fällt der Einfluß des Rauschens auf ca. 30 mikro-optische Dichte. 100 Abtastungen können in ca. 0,10 Sekunden wiederholt werden. Dies ist viel schneller als die Abtastgeschwindigkeit von mechanischen Spektrometern des bekannten Standes der Technik. Der Wellenlängen-Wiederholstreubereich liegt von Abtastung zu Abtastung im Rahmen von ca. 0,05 Nanometern.

Der Controller 302 empfängt Spannungssignale von den Detektoren 180 und 180a, von dem Proben- und dem Vergleichsstrahl. Der Controller 302 empfängt auch dann Spannungssignale von den Detektoren, wenn das System ruht und keine Strahlung empfangen wird. Diese "Dunkelfeld"-Werte werden vom Spannungssignal der Strahlen als Korrektur für Streulicht, das in das System einfallen kann, subtrahiert. Der Logarithmus der korrigierten Spannung des Vergleichsdetektors wird durch die korrigierte Spannung des Probendetektors geteilt, um die Extinktion oder die optische Dichte der Probe bei einer bestimmten Wellenlänge zu bestimmen, dementsprechend, wie es in der folgenden Gleichung dargestellt wird:

$$L = Log \left[ \frac{Vrd - Vrdr}{Vsd - Vsdr} \right]$$

wobei L die optische Dichte oder Extinktion ist, Vrd die Spannung des Vergleichsdetektors während einer Messung ist, Vrdr die Spannung des Vergleichsdetektors im Ruhezustand ist, Vsd die Spannung des Probendetektors während einer Messung ist und Vsdr die Spannung des Probendetektors im Ruhezustand ist. Die Anzeigen im Ruhezustand sind normalerweise die ersten Messungen bei jeder Abtastung.

Aus der Extinktion der Probe bei jeder Wellenlänge kann die Konzentration eines Bestandteils gemäß der folgenden Gleichung bestimmt werden:

$$(\%) = Bo + B1\ L1, + B2\ L2 + ...\ Bn\ Ln,$$

wobei (%) die Konzentration des zu messenden Probenbestandteils ist, Bo ... Bn Konstanten, die von der Probe und den Bestandteilen der zu messenden Probe, abhängen und L1 ... Ln entsprechen der Extinktion des Bestandteils in der Probe bei den Testwellenlängen o ... n sind.

Während der Proben- und der Vergleichsstrahl von den Detektoren 180 und 180a gleichzeitig gemessen werden, kann der Analog-Digital-Umsetzer, der die Signale vom Detektor empfängt, nur ein Signal zur Zeit verarbeiten. Daher sind die Messungen des Proben- und des Vergleichsstrahl, die zur Bestimmung der Extinktion verwendet werden, mehrere Mikrosekunden voneinander entfernt. Dieser Zeitunterschied ist zu kurz, um die Genauigkeit der Anzeigen zu beeinträchtigen. Es könnte ein Zweikanal-A-D-Umsetzer verwendet werden, doch dies würde die Kosten des AOTS erhöhen.

Zusätzlich zu den Korrekturen in bezug auf Rauschen durch die Vergleichs- und Ruhezustandsmessungen könnten auch Korrekturen aufgrund von Temperaturschwankungen beim AOTF 114 erforderlich sein. Der Temperaturregler 166 und das Heizelement 164 können die Temperatur des Kristalls im Rahmen von +/- 1 Grad Celsius halten. Abweichungen im Rahmen von einem Grad können jedoch das Wellenlängenband der abgestimmten Strahlen leicht verändern. Daher kann der Mikroprozessor 302 einen 24-Bit-Differenz-Code erzeugen, um je nach dem Temperatursignal vom Temperaturfühler eine unterschiedliche Antriebsfrequenz beim AOTF 114 zu generieren.

Eine weitere mögliche Fehlerquelle ist die akustische Resonanz, die von der Reflexion der akustischen Welle vom Ende des Kristalls gegenüber den Wandlern verursacht wird. Die Reflexion erzeugt eine Interferenz mit den primären akustischen Wellen, die von dem Wandler erzeugt werden und bildet ein Resonanzmuster, das das Wellenlängenband der einfallenden Strahlung, die abgestimmt ist, ändert. Es sind verschiedene Möglichkeiten vorhanden, um diese Resonanz auf ein Minimum zu beschränken, wie zum Beispiel, daß das entfernte Ende des Kristalls aufgerauht wird oder eine akustische Senke bereitgestellt wird, doch etwas Reflexion bleibt vorhanden.

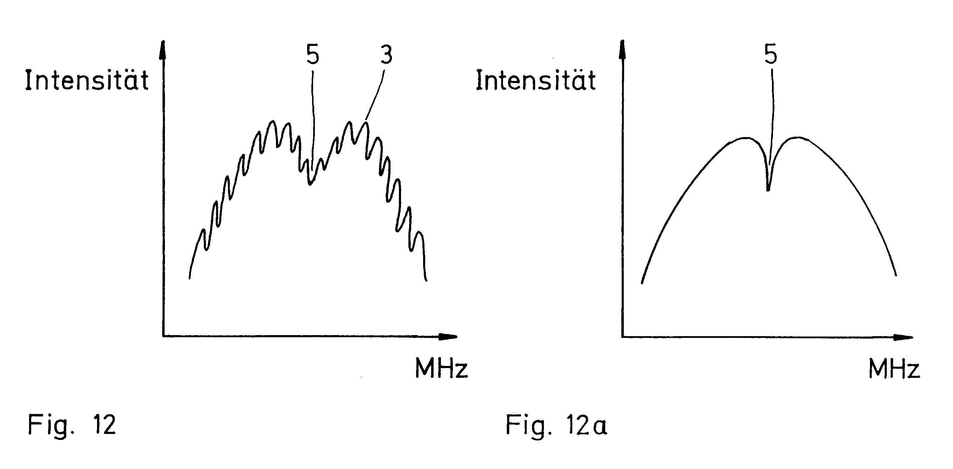

Die Wirkung dieser Reflexion wird in Abbildung 12 dargestellt, die die Frequenz, mit der der Kristall betrieben wird, gegen die Intensität eines Signals bei einem Detektor ohne vorhandene Probe graphisch darstellt. Die Kurve besteht aus Hochfrequenzschwingungen 3, die fast sinusförmig sind und die als akustische Resonanz-Randzone (acoustic resonant fringes) bezeichnet werden. Diese Resonanzen können bei der Extinktion einen Fehler von bis zu ca. 10 % hervorrufen. Die Intensität sollte sich gleichmäßig mit der Frequenz verändern, wie es in Abbildung 12a dargestellt ist. Das Gefälle 5 in der Graphik beruht auf der Extinktion der Lichtleitfaser selbst.

Eine Möglichkeit der Korrektur von akustischer Resonanz besteht darin, die Extinktionen an vielen, eng zusammenliegenden Punkten zu testen und den Durchschnitt aus der entstehenden Kurve zu ermitteln. Dies kann zeitaufwendig sein. Man hat herausgefunden, daß ein Durchschnitt der Intensität von einer Viertel Wellenlänge über und unter der gewünschten Frequenz sich genau der tatsächlichen Intensität annähert.

Die derzeit bevorzugte Möglichkeit besteht darin, aus der Intensität bei einer gegebenen Frequenz und der Intensität bei dieser Frequenz plus der Hälfte der Wellenlänge einer akustischen Resonanz den Durchschnitt zu ermitteln. Dieser Wert kann auch vom Hersteller des Kristalls, gestützt auf die Eigenschaften des Kristalls, bestimmt werden.

Die einzigartige optische Konstruktion und die vielen Korrekturen, die von dem Kontrollsystem vorgenommen werden, versetzen das AOTS der vorliegenden Erfindung in die Lage, schneller, sorgfältiger und präziser zu sein als Analysesysteme des bekannten Standes der Technik. Es ist eine nahezu gleichzeitige Auswertung einer Probe über das gesamte interessierende Spektrum möglich. Das System ist für On-Line-Überwachung von fließenden Proben während der Betriebsabläufe ideal geeignet.

## Patentansprüche

1. Akusto-optisch abstimmbares Zweistrahl-Spektrometer bestehend aus
einer Strahlungsquelle (102),
einer Vorrichtung zur Kollimation (110) von aus der Quelle austretender Strahlung,
einem akusto-optisch abstimmbaren Filter (114),
einer Ansteuerung (300) des akusto-optisch abstimmbaren Filters (114) für spezielle Frequenzen, so daß gewünschte enge Bandbreiten der auf das akusto-optisch abstimmbare Filter einfallenden Strahlung selektiert werden, **dadurch gekennzeichnet**, daß im Gebrauch der akusto-optisch abstimmbare Filter (114) einen ersten, ordentlichen (T0) oder außerordentlichen (TE), und einen zweiten, außerordentlichen (TE) oder ordentlichen (TO), Strahl der gewünschten engen Bandbreite bildet, sowie einen dritten Strahl (NT) außerhalb der engen Bandbreite bildet, wobei alle drei Strahlen (TO, TE, TN) in der Richtung voneinander abweichen, wobei eine erste Vorrichtung vorgesehen ist, durch welche der zweite Strahl (TE bzw. TO) als Meßstrahl auf einem ersten Strahlenweg auf die Probe (200) und nach Beeinflussung durch den Probenbereich einer ersten Empfangseinrichtung (180) zugeführt wird und eine zweite Vorrichtung vorgesehen ist, durch welche der erste Strahl (TO bzw. TE) auf einem zweiten Strahlenweg als Referenzstrahl einer zweiten Empfangseinrichtung (180a) zugeführt wird, wobei die beiden Strahlenwege außerhalb des Probenbereichs (200) analog aufgebaut sind und die von den Empfängern (180, 180a) ermittelten Signale einer Vorrichtung (300) zur Bildung eines Meßsignals zuführbar sind.

2. Spektrometer nach Anspruch 1, **dadurch gekennzeichnet**, daß die Vorrichtung zur Kollimation der Strahlen eine Kollimatorlinse (110) enthält, wobei insbesondere die selektierten Strahlen nach Anregung des akusto-optisch abstimmbaren Filters (114) eine Winkelabweichung aufweisen, und die Kollimatorlinse (110) einen Öffnungswinkel aufweist, der weniger als die Hälfte der Winkelabweichung ist, und vorzugsweise zwischen der Strahlenquelle (102) und der Kollimatorlinse (110) ein Kondensor (104) zur Sammlung der Strahlen aus der Strahlenquelle (102) angeordnet ist.

3. Spektrometer nach Anspruch 2, **dadurch gekennzeichnet**, daß es eine Kondensorvorrichtung (104) aufweist, die vorzugsweise aus einem Paar plankonvexer Linsen (106) und einer ersten Blende (108) besteht, wobei die Linsen die Strahlung auf die erste Blende (108) fokussieren, so daß die Blende (108) den Winkel der auf die Kollimatorlinse (110) fallenden Strahlung bestimmt.

4. Spektrometer nach Anspruch 2 oder 3, **dadurch gekennzeichnet**, daß eine erste Blende (108) zwischen der Strahlungsquelle (102) und der Kollimatorlinse (110) angeordnet ist, um die Winkelöffnung der auf die Kollimatorlinse einfallende Strahlung zu bestimmen, und/oder eine zweite Blende (112) zwischen der Kollimatorlinse (110) und dem akustooptisch abstimmbaren Filter (104) angeordnet ist, um den Querschnitt des Strahls zu bestimmen, der auf das akusto-optisch abstimmbare Filter (114) fällt, wobei der Querschnitt des auf den akustooptisch abstimmbaren Filter (114) einfallenden Strahls vorzugsweise geringfügig kleiner ist als die Größe des akusto-optisch abstimmbaren Filters (114).

5. Spektrometer nach Anspruch 2, 3 oder 4, **dadurch gekennzeichnet**, daß es eine Scheibe (118) mit Öffnungen (126, 128) für den ersten (TO) und zweiten (ET) selektierten Strahl aufweist, wobei die erste Öffnung (128) zum Empfang des ersten selektierten Strahls (T0) und die zweite Öffnung (126) zum Empfang des zweiten selektierten Strahls (TE) vorgesehen ist, und die Scheibe (118) außerdem einen zentralen Bereich (130) aufweist, um die nicht selektierte Strahlung (NT) abzuschatten und vorzugsweise ein achromatisches Linsensystem (116) aufweist, zur Sammlung der aus dem akusto-optisch abstimmbaren Kristall (114) austretenden Strahlung und zum Fokussieren des ersten selektierten Strahls (TO) auf die Öffnung (128) des ersten Strahls (TO), zur Fokussierung des zweiten selektierten Strahls (TE) auf die Öffnung (126) des zweiten selektierten Strahls (TE) sowie zur Fokussierung des nicht abgestimmten Strahls (NT) auf den zentralen Bereich (130), der hinter dem Filter gelegenen Scheibe (118), wobei das achromatische Linsensystem (116) insbesondere eine achromatische Objektivlinse (116a) und ein aplanare Meniskuslinse (116b) aufweist.

6. Spektrometer nach Anspruch 5, **dadurch gekennzeichnet**, daß die Vorrichtung zur Weiterleitung des ersten (TO) und zweiten (TE) selektierten Strahls optische Leiter (132) und das Spektrometer außerdem ein erstes und zweites Kondensorsystem (132) aufweist, um den ersten (TO) und zweiten (TE) selektierten Strahl zu sammeln, der von der ersten (128) und zweiten (126) Öffnung empfangen wird, und auf den ersten (132b) und zweiten (132a) optischen Leiter zu fokussieren, sowie vorzugsweise ein Kabel vorgesehen ist, um den ersten und zweiten optischen Leiter aufzunehmen, wobei die Vorrichtung, um den Strahl auf die Probe zu lenken, insbesondere eine Lichtleitfaser ist.

7. Spektrometer nach Anspruch 1, 2, 3, 4, 5 oder 6, **dadurch gekennzeichnet**, daß es eine Probenzelle (200) zur Aufnahme der zu analysierenden Proben aufweist, wobei der selektierte Strahl mittels optischer Leiter (132a) auf die Probe (200) gerichtet wird, und außerdem ein dritter optischer Leiter (226) vorgesehen ist, um den ersten selektierten Strahl (TO) von der Probenzelle zu einem ersten Sensor (180) zu leiten, wobei der erste und zweite Sensor (180, 180a) vorzugsweise Indium-Gallium-Arsenid oder Germanium und/oder außerdem Silizium aufweist.

8. Spektrometer nach Anspruch 1, 2, 3, 4, 5, 6 oder 7, **dadurch gekennzeichnet,** daß die Vorrichtung zur Ansteuerung des akusto-optisch abstimmbaren Filters (114) eine Steuerung (300) und in Kontak mit dem aukustisch optisch abstimmbaren Filter (114) einen Wandler (122) aufweist, der Wandler (122) von der Steuerung (124, 300) gespeist wird, wobei die Steuerung (300) insbesondere einen Mikroprozessor (302) enthält, um ein Signal zu erzeugen, das der gewünschten Ansteuerfrequenz des akusto-optisch abgstimmbaren Filters (114) entspricht, und einen Hochfrequenzsynthetisierer, um das Signal in eine Frequenz zur Ansteuerung des Wandlers umzusetzen.

9. Spektrometer nach Anspruch 8, **dadurch gekennzeichnet**, daß der Hochfrequenzsynthetisierer (306) einen Niederfrequenzsynthetisierer (324) und ein phasengekoppelten Schaltkreis (326) zur Erzeugung der Frequenz aufweist, die zur Ansteuerung des Wandlers (122) erforderlich ist.

10. Spektrometer nach Anspruch 8 oder 9, **dadurch gekennzeichnet**, daß der Mikroprozessor (302) Temperaturabweichungen des akusto-optisch abstimmbaren Filters (114) berücksichtigt, indem er ein Differenzsignal erzeugt, um das akusto-optisch abstimmbare Filter mit der erforderlichen Frequenz anzusteuern.

11. Spektrometer nach Anspruch 8, 9, oder 10, **dadurch gekennzeichnet**, daß der Mikroprozessor (302) Messungen mittelt, um akustische Resonanzen zu korrigieren, wobei vorzugsweise die Messungen mit gleichen Inkrementen der akustischen Resonanzwellenlänge oberhalb und unterhalb der gewünschten Frequenz durch geführt werden.

12. Spektrometer nach Anspruch 11, **dadurch gekennzeichnet**, daß das Wellenlängeninkrement ¼ beträgt.

13. Spektrometer nach Anspruch 11, **dadurch gekennzeichnet**, daß eine der Messungen bei der gewünschten Frequenz erfolgt und die andere die Hälfte des akustischen Wellenlängeninkrements oberhalb der gewünschten Frequenz beträgt.

14. Spektrometer nach Anspruch 8, 9, 10, 11, 12 oder 13, **dadurch gekennzeichnet**, daß der Mikroprozessor das Signal der Empfänger mißt, bevor eine Ansteuerungsfrequenz erzeugt wird, wobei die Messungen zur Korrektur aufeinanderfolgender Proben- und Referenzmessungen benutzt werden.

15. Verfahren zur spektroskopischen Analyse flüssiger Proben, durch Aussendung infraroter Strahlung, Sammlung der Strahlung, Einleiten der Strahlung in ein doppelbrechendes akusto-optisch abstimmbares Filter, Ansteuerung des akusto-optisch abstimmbaren Filters mit einer gewünschten Frequenz, um eine spezielle enge Bandbreite der Strahlung zu selektieren, **dadurch gekennzeichnet**, daß der AOTF einen ersten, ordentlichen (TO) oder außerordentlichen (TE), und einen zweiten, außerordentlichen (TE) oder ordentlichen (TO), Strahl der gewünschten engen Bandbreite bildet, sowie einen dritten Strahl (NT) außerhalb der engen Bandbreite bildet, wobei alle drei Strahlen in der Richtung voneinander abweichen, daß der zweite Strahl als Meßstrahl auf einem ersten Strahlenweg auf die Probe und nach Beeinflussung durch den Probenbereich einer ersten Empfangseinrichtung zugeführt wird, daß der erste Strahl auf einem zweiten Strahlenweg als Referenzstrahl einer zweiten Empfangseinrichtung zugeführt wird, und daß die Extinktion der Probe für die Wellenlänge in Abhängigkeit von dem Wert des empfangenen ersten Strahls und des empfangenen zweiten Strahls bestimmt wird.

## Claims

1. Acousto-optically tunable dual-beam spectrometer consisting of a radiation source (102),
a device for the collimation (110) of radiation emerging from the source,
an acousto-optically tunable filter (114),
a drive (300) of the acousto-optically tunable filter (114) for special frequencies, so that desired narrow bandwidths of the radiation impinging onto the acousto-optically tunable filter are selected,
characterised in that during use the acousto-optically tunable filter (114) forms a first, ordinary (TO) or extraordinary (TE), and a second, extraordinary (TE) or ordinary (TO), beam of the desired narrow bandwidth, together with a third beam (NT) outside the narrow bandwidth, wherein all three beams (TO, TE, TN) diverge in direction from one another, wherein a first device is provided by means of which the second beam (TE or TO) is passed as a test beam on a first beam path to the sample (200) and after influencing by the sample area to a first reception unit (180) and a second device is provided by means of which the first beam (TO or TE) is passed on a second beam path as reference beam to a second reception unit (180a), wherein the two beam paths are built up analogously outside the sample area (200) and the signals detected by the receivers (180, 180a) can be passed to a device (300) for the formation of a test signal.

2. Spectrometer according to claim 1, characterised in that the device for the collimation of the beams contains a collimator lens (110), wherein in particular the selected beams exhibit after excitation of the acousto-optically tunable filter (114) an angular deflection, and the collimator lens exhibits an angle of aperture which is less than half the angular deflection, and preferably between the radiation source (102) and the collimator lens (110) a condenser (104) is disposed for collecting the beams from the radiation source (102).

3. Spectrometer according to claim 2, characterised in that it comprises a condenser unit (104) which preferably consists of a pair of plano-convex lenses (106) and a first diaphragm (108), wherein the lenses focus the radiation onto the first diaphragm (108) so that the diaphragm (108) determines the angle of the radiation impinging onto the collimator lens (110).

4. Spectrometer according to claim 2 or 3, characterised in that a first diaphragm (108) is disposed between the radiation source (102) and the collimator lens (110) in order to determine the angular aperture of the radiation impinging onto the collimator lens, and/or a second diaphragm (112) is disposed between the collimator lens (110) and the acousto-optically tunable filter (104) in order to determine the cross-section of the beam which impinges onto the acousto-optically tunable filter (114), wherein the cross-section of the beam impinging onto the acousto-optically tunable filter (114) is preferably smaller than the size of the acousto-optically tunable filter (114).

5. Spectrometer according to claim 2, 3 or 4, characterised in that it comprises a disc (118) with openings (126, 128) for the first (TO) and second (ET) selected beam, wherein the first opening (128) is provided for the reception of the first selected beam (TO) and the second opening (126) for the selection of the second selected beam (TE), and the disc (118) comprises in addition a central area (130) for shading the non-selected radiation (NT) and preferably comprises an achromatic lens system (116) for the collection of the radiation leaving the acousto-optically tunable crystal (114) and for the focussing of the first selected beam (TO) onto the opening (128) of the first beam (TO), for the focussing of the second selected beam (TE) onto the opening (126) of the second selected beam (TE) and for the focussing of the non-tuned beam (NT) onto the central area (130) of the disc (118) positioned behind the filter, wherein the achromatic lens system (116) comprises in particular an achromatic objective lens (116a) and an aplanar meniscus lens (116b).

6. Spectrometer according to claim 5, characterised in that the device for forwarding the first (TO) and second (TE) selected beams comprises optical conductors (132) and the spectrometer comprises in addition a first and second condenser system (132) for collecting the first (TO) and second (TE) selected beams which are received by the first (128) and second (126) openings, and focussing them onto the first (132b) and second (132a) optical conductors, together preferably with a cable for accommodating the first and second optical conductors, wherein the device for directing the beam onto the sample is in particular a optical fibre.

7. Spectrometer according to claim 1, 2, 3, 4, 5 or 6, characterised in that it comprises a sample cell (200) for accommodating the samples to be analysed, wherein the selected beam is directed by means of optical conductors (132a) onto the sample, and in addition a third optical conductor (226) is provided for conveying the first selected beam (TO) from the sample cell to a first sensor (180), wherein the first and second sensors (180, 180a) comprise preferably indium-gallium arsenide or germanium and/or also silicon.

8. Spectrometer according to claim 1, 2, 3, 4, 5, 6 or 7, characterised in that the device for driving the acousto-optically tunable filter (114) comprises a control unit (300) and, in contact with the acousto-optically tunable filter (114), a transducer (122), the transducer (122) is fed by the control unit (124, 300), wherein the control unit (300) contains in particular a microprocessor (302) for generating a signal which corresponds to the desired drive frequency of the acousto-optically tunable filter (114), and a high-frequency synthesizer for converting the signal into a frequency for driving the transducer.

9. Spectrometer according to claim 8, characterised in that the high-frequency synthesizer (306) comprises a low-frequency synthesizer (324) and a phase-locked loop (326) for generating the frequency which is required for driving the transducer (122).

10. Spectrometer according to claim 8 or 9, characterised in that the microprocessor (302) takes account of temperature fluctuations of the acousto-optically tunable filter (114) by generating a difference signal for driving the acousto-optically tunable filter at the required frequency.

11. Spectrometer according to claim 8, 9 or 10, characterised in that the microprocessor (302) takes the mean of measurements in order to correct acoustic resonances, wherein preferably the measurements are carried out with identical increments of the acoustic resonance wavelength above and below the desired frequency.

12. Spectrometer according to claim 11, characterised in that the wavelength increment comes to $\frac{1}{4}$.

13. Spectrometer according to claim 11, characterised in that one of the measurements takes place at the desired frequency and the other comes to half of the acoustic wavelength increment above the desired frequency.

14. Spectrometer according to claim 8, 9, 10, 11, 12 or 13, characterised in that the microprocessor measures the signal of the receivers before a drive frequency is generated, wherein the measurements are used for the correction of successive sample and reference measurements.

15. Method for the spectroscopic analysis of fluid products by the transmission of infrared radiation, collection of the radiation, introduction of the radiation into a birefringent acousto-optically tunable filter, driving of the acousto-optically tunable filter at a desired frequency in order to select a special narrow bandwidth

EP 0 476 088 B1

of the radiation, characterised in that the AOTF forms a first, ordinary ((TO) or extraordinary (TE), and a second, extraordinary (TE) or ordinary (TO), beam of the desired narrow bandwidth, together with a third beam (NT) outside the narrow bandwidth, wherein all three beams deviate in direction from one another, that the second beam is passed as a test beam on a first beam path to the sample and after influencing by the sample area to a first reception unit, that the first beam is passed on a second beam path as reference beam to a second reception unit, and that the absorbance of the sample is determined for the wavelength as a function of the value of the first beam received and the second beam received.

## Revendications

1. Spectromètre acousto-optique à double faisceau accordable composé d'une source de rayonnement (102), d'un dispositif collimateur (110) pour le rayonnement émis par la source, d'un filtre acousto-optique accordé (114), d'une commande (300) du filtre acousto-optique accordé (114) pour des fréquences particulières pour sélectionner des largeurs de bande étroites souhaitées du rayonnement incident pour le filtre acousto-optique accordé, caractérisé en ce qu'en fonctionnement du filtre acousto-optique accordé (114), on forme une première largeur de bande ordinaire (TO) ou extraordinaire (TE) et une seconde largeur de bande étroite, extraordinaire (TE) ou ordinaire (TO) du faisceau, ainsi qu'un troisième faisceau (NT) à l'extérieur de la largeur de bande étroite, les trois faisceaux (TO, TE, TN) ayant des directions différentes, un premier dispositif étant prévu pour conduire le second faisceau (TE ou TO) comme faisceau de mesure suivant un premier chemin sur l'échantillon (200) et, après avoir été influencé par la plage de l'échantillon, sur une première installation de réception (180), ainsi qu'un second dispositif qui conduit le premier faisceau (TO ou TE) suivant un second chemin comme faisceau de référence vers une seconde installation de réception (180a), les deux chemins de faisceaux étant réalisés de manière analogue à l'extérieur de la plage (200) de l'échantillon et fournissant les signaux donnés par les récepteurs (180, 180a) à un dispositif (300) formant un signal de mesure.

2. Spectromètre selon la revendication 1, caractérisé en ce que le dispositif collimateur des faisceaux comprend une lentille de collimateur (110) et notamment les faisceaux sélectionnés, après excitation des filtres acousto-optiques accordés (114) ayant une déviation angulaire, en ce que la lentille de collimateur (110) a un angle d'ouverture inférieur à la moitié de la déviation angulaire et en ce que, de préférence entre la source de rayonnement (102) et la lentille de collimateur il y a un condenseur (104) pour collecter les rayons de la source de rayonnement (102).

3. Spectromètre selon la revendication 2, caractérisé par un dispositif condenseur (104) formé de préférence d'une paire de lentilles plan-convexes (106) et d'un premier diaphragme (108), les lentilles focalisant le rayonnement sur le premier diaphragme (108) pour que ce diaphragme (108) définisse l'angle du rayonnement incident tombant sur la lentille de collimateur (110).

4. Spectromètre selon la revendication 1 ou 2, caractérisé par un premier diaphragme (108) entre la source de rayonnement (102) et la lentille de collimateur (110) pour définir l'ouverture angulaire du rayonnement incident tombant sur la lentille de collimateur, et/ou un second diaphragme (112) entre la lentille de collimateur (110) et le filtre acousto-optique accordé (104), pour définir la section du faisceau tombant sur le filtre acousto-optique accordé (114), la section du faisceau incident tombant sur le filtre acousto-optique accordé (114) étant de préférence légèrement inférieure à la dimension du filtre acousto-optique accordé (114).

5. Spectromètre selon la revendication 2, 3 ou 4, caractérisé en ce qu'il comprend un disque (118) avec des ouvertures (126, 128) pour un premier faisceau (TO) et un second faisceau (TE), la première ouverture (128) étant prévue pour recevoir le premier faisceau sélectionné (TO) et la seconde ouverture (126) pour recevoir le second faisceau sélectionné (TE), et le disque (118) comporte en outre une zone centrale (130) pour couper le faisceau non sélectionné (NT) et de préférence un système de lentille achromatique (116) pour collecter le faisceau émis par le cristal acousto-optique accordé (114) et focaliser le premier faisceau sélectionné (TO) sur l'ouverture (128) destinée à ce premier faisceau, pour focaliser le second faisceau sélectionné (TE) sur l'ouverture (126) du second faisceau sélectionné (TE), ainsi que pour focaliser le faisceau non accordé (NT) sur la zone centrale (130) du disque (118) en aval du filtre, le système de lentille achromatique (116) comprenant notamment une lentille d'objectif achromatique (116a) et une lentille à ménisque aplanaire (116b).

15

**6.** Spectromètre selon la revendication 5, caractérisé en ce que le dispositif pour transmettre le premier faisceau (TO) et le second faisceau (TE) sélectionnés comprend des guides optiques (132), et le spectromètre comprend en outre un premier et un second système de condenseur (132) pour regrouper le premier faisceau sélectionné (TO) et le second faisceau sélectionné (TE), reçus par la première et la seconde ouverture (128, 126), et focaliser sur le premier et le second guide optique (132b, 132a), ainsi que de préférence un câble recevant le premier et le second guide optique, le dispositif conduisant le faisceau sur l'échantillon étant de préférence une fibre guide de lumière.

**7.** Spectromètre selon les revendications 1, 2, 3, 5 ou 6, caractérisé par une cellule à échantillon (200) recevant l'échantillon destiné à l'analyse, le faisceau sélectionné étant dirigé sur l'échantillon (200) par des guides optiques (132a), un troisième guide optique (126) étant prévu pour conduire le premier faisceau sélectionné (TO) de la cellule sur le premier détecteur (180), le premier et le second détecteur (180, 180a) étant de préférence à base d'arséniure, d'indium-gallium, ou de germanium et/ou, en outre, de silicium.

**8.** Spectromètre selon la revendication 1, 2, 3, 4, 5, 6 ou 7, caractérisé en ce que le dispositif de commande du filtre acousto-optique accordé (114) comprend une commande (300) et, en contact avec le filtre acousto-optique accordé (114), un convertisseur (122) alimenté par la commande (124, 300), cette commande (300) comprenant notamment un microprocesseur (302) pour créer un signal qui correspond à la fréquence de commande souhaitée du filtre acousto-optique accordé (114), ainsi qu'un synthétiseur haute fréquence pour convertir le signal en une fréquence commandant le convertisseur.

**9.** Spectromètre selon la revendication 8, caractérisé en ce que le synthétiseur haute fréquence (306) comprend un synthétiseur basse fréquence (324) et un circuit de commutation (326) couplés en phase pour créer la fréquence nécessaire à la commande du convertisseur (122).

**10.** Spectromètre selon la revendication 8 ou 9, caractérisé en ce que le microprocesseur (302) tient compte des déviations de température du filtre acousto-optique accordé (114) en créant un signal de différence pour commander le filtre acousto-optique accordé à la fréquence nécessaire.

**11.** Spectromètre selon la revendication 8, 9, ou 10, caractérisé en ce que le microprocesseur (302) fait la moyenne des mesures pour corriger les résonances acoustiques, et en ce que les mesures sont faite de préférence avec les mêmes incréments de longueurs d'onde de résonance acoustique au-dessus et en dessous de la fréquence souhaitée.

**12.** Spectromètre selon la revendication 11, caractérisé en ce que l'incrément correspond à un quart de longueur d'onde.

**13.** Spectromètre selon la revendication 11, caractérisé en ce que l'une des mesures se fait à la fréquence souhaitée et l'autre correspond à la moitié de l'incrément de longueur d'onde acoustique au-dessus de la fréquence souhaitée.

**14.** Spectromètre selon la revendication 8, 9, 10, 11, 12 ou 13, caractérisé en ce que le microprocesseur mesure le signal du récepteur avant de créer une fréquence de commande, la mesure étant utilisée pour corriger les mesures d'échantillons et de références qui se suivent.

**15.** Procédé d'analyse spectroscopique d'échantillons liquides par l'émission d'un rayonnement infrarouge, la collecte du rayonnement, son injection dans un filtre acousto-optique accordé, à double réfraction, la commande du filtre acousto-optique accordé à la fréquence souhaitée pour sélectionner une largeur de bande particulière étroite pour le rayonnement, caractérisé en ce que l'élément (AOTF) forme un premier faisceau ordinaire (TO) ou extraordinaire (TE) et un second faisceau extraordinaire (TE) ou ordinaire (TO) dans la largeur de bande étroite souhaitée, ainsi qu'un troisième faisceau (NT) à l'extérieur de la largeur de bande étroite, les trois faisceaux déviant en direction l'un de l'autre, le second faisceau étant conduit comme faisceau de mesure, suivant un premier chemin, sur l'échantillon et, après avoir été influencé par l'échantillon dans une première installation de réception, ce premier faisceau étant conduit suivant un second chemin servant de chemin de référence, dans une seconde installation de réception, et l'extinction de l'échantillon pour les longueurs d'onde est définie en fonction de la valeur du premier faisceau reçu et du second faisceau reçu.

```
┌─────────────────────────┐
│   Elektro-optisches      │                  ┌──────────────────┐
│       System             │ ───────────────► │   Probenzelle    │
│                          │                  │                  │
│        100               │ ◄─────────────── │      200         │
└─────────────────────────┘                  └──────────────────┘
         │   │
         │   │
┌─────────────────────────┐
│                          │
│       Steuerung          │
│                          │
│         300              │
│                          │
└─────────────────────────┘
```

Fig. 1

EP 0 476 088 B1

von Steuerung 300

Fig. 2

Fig. 3

EP 0 476 088 B1

Fig. 3a          Fig. 3b          Fig. 3c

108          112          118

126

130

128

20

EP 0 476 088 B1

FIG.4

FIG.5

FIG.5a

FIG.6

EP 0 476 088 B1

Steuerung

166

Fig. 6a

FIG.6b

FIG.7

Fig. 8

EP 0 476 088 B1

FIG.8a

**FIG.9**

**FIG.9a**

**FIG.9b**

FIG.IO

HF-Verstärker *124*

Detektor
und
T-Sensor

*306a*

*186*

*186a*

*192a*

*190a*

*188*

*184, 184a*

*188a*

| HF-<br>Synthesizer<br><br>*306* | Multiplexer<br>*308a*<br><br>A/D Wandler<br><br>*308* | Eingabe/<br>Ausgabe-<br>Kreis<br><br>*304* |
|---|---|---|

Leckdetektor

*234*

AT-
BUS
*303*

± 5V
± 12V

*322*

Stromvers.

Mikroprozessor

*302*

| *312* |
| *314* |
| *316* |
| *318* |
| *320* |

serielle
Schnittstelle

FIG.II

306

326

NF-Synthesi-zer
324

Sensor
332

Filter
334

"VCO"
328

HF-Schalter
338

von Eingabe-/
Ausgabeeinheit

%
330

zum HF-
Verstärker 124

EP 0 476 088 B1

Fig. 11a

Fig. 12a

Fig. 12